# EUROPÄISCHE PATENTANMELDUNG

(11) **EP 3 025 923 A1**
(43) Veröffentlichungstag der Anmeldung: **01.06.2016**
(21) Anmeldenummer: 15002740.7
(22) Anmeldetag: 21.09.2015
(51) Int. Cl.: B61D 1/08

(54) **PLATZÖKONOMISCHER SCHLAFWAGEN MIT MISCHUNG VON ABTEILEN, LIEGEKABINEN UND SITZPLÄTZEN**

(30) Priorität: 23.09.2014 DE 102014014243
(71) Anmelder: Falkenhagen, Joachim, 10967 Berlin (DE)
(72) Erfinder: Falkenhagen, Joachim, 10967 Berlin (DE)

(57) **Zusammenfassung**

Abteilanordnung mit einer Kombination vorzugsweise von kabinenförmigen Abteilen ohne Stehhöhe (1, 8) ggf. mit Umbaumöglichkeit zu einem Sitzplatzpaar (8), Abteilen mit eigenem, als Steh- und Umkleidebereich nutzbarem Abteilflur (7) neben den Betten (6) und den Abteilen nicht fest zugeordneten Sitzplätzen (18), sowie zugehörige Ausprägungen und Details, insbesondere bei doppelstöckigen Waggons mit variierender Höhe (+4) des Fußbodens im längs verlaufenen Korridor (4) und abzweigenden Treppenstufen zu einer anderen Etage sowie bei Abteilfluren (7), die sich nicht über die volle Länge des Bettes erstrecken.

## Beschreibung

Aufgabe der Erfindung ist eine zweckmäßige Anordnung von Abteilen bzw. Kabinen und Sitzmöglichkeiten, vorzugsweise in einem Schlafwagen-Eisenbahnwaggon, mit der eine hohe Raumausnutzung, ein hoher Anteil von Einzelschlafplätzen und eine stärkere Ausnutzung des Korridorbereichs bei noch vertretbarem Platzangebot bzw. Gedränge im Korridor erreicht wird und die eine gute Nutzung der Funktionsbereiche auch bei Teilbelegung des Zuges erlaubt.

Zu den Zielen gehören auch günstige Herstell- und Unterhaltskosten, was durch einfache Formen mit vorzugsweise vertikalen Umgrenzungen der nebeneinander liegenden Abteile und den Verzicht auf aufwändige Klappvorrichtungen erreicht wird. Beengende Einbuchtungen in Abteilen sollen begrenzt werden, v.a. oberseitige Einbuchtungen mit resultierenden Stoßkanten. Eine angemessene Zahl von bequemen Sitzplätzen soll für Streckenabschnitte vor und nach der eigentlichen Nachtruhe verfügbar sein. Schließlich soll das Raumkonzept durch Differenzierung von Qualität und damit Preisen unterschiedliche Nachfrage ansprechen.

Bei Schlaf- und Liegewagenzügen kommt es vor allem auf die Bequemlichkeit im Liegen an, also eine genügende Breite und Länge einer ebenen Liegefläche, weniger aber auf die für jeden Reisenden zur Verfügung stehende Höhe, weswegen Stockbetten bevorzugt werden. Außerdem sollten Störungen durch weitere Reisende begrenzt werden, vorzugsweise durch möglichst wenige Personen im Abteil.

### Stand der Technik

Das Abteilprinzip europäischer Schlaf- und Liegewagen ist von der Raumaufteilung in Postkutschen abgeleitet, die in Eisenbahnzügen erst gereiht und dann um einen Seitengang ergänzt wurde. Mit ca. 12 Schlafwagen-Halbabteilen je Waggon können nicht viele Reisende transportiert werden, Einzelreisende teilen sich häufig eine Kabine. Mit einem Vorhang abgetrennte Schlafbereiche, z.B. in Kajütliegewagen beidseitig eines Mittelgangs, ermöglichen ebenfalls keinen ungestörten Schlafkomfort.

Eine als Schlafanhänger von Bussen verwendete Bauform beruht auf längs (JP002001063566) oder nebeneinander (DE000001223705) und meist dreistöckig übereinander gestapelten Schlafabteilen (in der folgenden Beschreibung zur besseren Unterscheidung von den "normalen" Abteilen auch als Kabinen bezeichnet), die von einem Korridor erschlossen werden. Dies ergibt eine recht hohe Packungsdichte liegender Menschen. Liegen beiQuer-Anordnung drei Personen übereinander in Kabinen mit 75 cm Breite inkl. Wand , entspricht dies vier Personen (3/0,75) auf einen Meter Wagenlänge. Bei 2er-Kabinen mit 120 cm Breite sind es fünf Personen auf einen Meter. In der Praxis wird bei dieser Bauform auf gangseitige Türen verzichtet, für die ja allenfalls nach innen schwenkend Platz vorhanden wäre, stattdessen gibt es Rollläden. Die Busanwendung auf Standplätzen bietet bereits aufgewachten Personen jedoch bessere Ausweichmöglichkeiten als ein fahrender Zug. Der Aufenthalt von vier oder fünf Reisenden in einem Meter Korridorlänge mit beispielsweise 60 cm Breite wäre selbst ohne Gepäck äußerst beengt, ein gleichzeitiges Ein- und Aussteigen aller Reisenden bei Abfahrt bzw. kurz nach Ankunft des Zugs wäre daher unmöglich. Ein Umbau derartiger Kabinen in Sitzplätze ist kaum praktikabel.

Längs beidseitig eines mittigen Gangs angeordnete Kabinen ähnlicher Art ergäben eine schlechtere Ausnutzung der Breite von Eisenbahnwaggons.

Die üblichen europäischen Schlafwagen-Waggons weisen einen seitlich verlaufenden Korridor und daneben Abteile mit quer zur Fahrtrichtung angeordneten Stockbetten und einen ebenfalls quer orientieren Bereich mit Stehhöhe auf, im weiteren als Abteilflur bezeichnet. Über eine in diesem Abteilflur aufgestellte Leiter kann dann in die oberen Betten geklettert werden. Der Abteilflur erstreckt sich üblicherweise bis zu der gegenüberliegenden Außenwand mit ihren Fenstern und wird i.d.R. noch durch ein Waschbecken genutzt. Der Boden dient als Abstellfläche u.a. für Schuhe und Koffer sowie beim Sitzen auf den unteren Betten als Fußraum. Bei hochgeklapptem 2. Bett wird der nachts zum Liegen genutzte Raum als Luftraum zum aufrechten Sitzen auf dem unteren Bett verfügbar. Bei Liegewagen-Waggons befinden sich Liegeflächen beidseitig des jeweiligen Abteilflurs, so dass der entsprechende Freiraum von doppelt so vielen Fahrgästen genutzt werden kann, nämlich von bis zu sechs Personen pro Abteil bei Belegung in drei Etagen. Während einer Nachtfahrt sind diese Abteilflure und auch die Korridore von Schlafwagen jedoch nur wenig genutzt.

In einer verwandten Bauform mit einem einzigen seitlichen Korridor und Abteilen mit Stehhöhe in zwei Etagen führt jeweils eine halbe, meist quer zu dem Korridor liegende Treppe zu je zwei Abteilen nach oben bzw. unten (z.B. DD000000049856 und DE202004009131, DE102005026824 und DE000004315353), wobei sich die oberen Liegeflächen teilweise über den Korridor erstecken. Die jeweilige Treppe ragt in der realisierten Bauweise der EP000000384262 gewendelt in den sonst als Abteilflur nutzbaren Bereich herein, womit sich der verbleibende Abteilflur nur über einen Teil der Länge der Liegefläche bzw. Liegeflächen des Abteils erstreckt, so dass der Abteilgrundriss also grob betrachtet eine Winkelform (L-Form) aufweist, wobei die zur Rechteckform der Abteile fehlende, für den Treppenraum genutzte Aussparung nicht rechtwinklig ist. Ein Teil der Betten, vorzugsweise das Fußende, reicht also in den dreiseitig von Wänden umgebenden Schenkel der Winkelform hinein.

Verschiedene vorgeschlagene Bauweisen versuchen insbesondere, in Längsschnittform unterschiedliche Abteile, u.a. in L- und T-Form mit quer zur Fahrtrichtung stehenden Betten und Abteilfluren vertikal zu verschachteln z.B. BE000000562934, DE000000307492, DE000001271145, ohne dieses Prinzip auf längs angeordnete Betten zu übertragen. Beispielsweise wird dabei der Raum unter den Sitzen bzw. über der Kopfhöhe im Sitzen anderen Abteilen zugeschlagen. Andere verbinden längs in zwei Etagen versetzt angeordnete Betten mit entsprechend kurzen Abteilfluren (BE000000527490), also im Wesentlichen den liegenden Quaderbereich des Bettes mit dem aufrechten Quader des Abteilflurs. Einige basieren auf einer dreidimensionalen Verschachtelung (DE000000830514B), wobei ein Abteil wie z.B. in der DE000000471319A wie auch CH000000294215, im vereinfachten Grundprinzip seiner Form, aus zwei zusammengefügten oder verschnittenen Quadern bestehen kann, von denen je einer Stehhöhe aufweist und ein weiterer eine geringere Höhe aufweist und die Liegefläche einnimmt (z.B.), wobei üblicherweise die Liegebereiche zweier Abteile übereinander liegen und die Stehbereiche nebeneinander. Die Stapelung der Liegebereiche erfolgt teilweise nur für einen Teil ihrer Abmessung, was dann eine Nutzung des übrigen Teils der unteren Liegefläche zum aufrechten Sitzen ermöglicht. Meistens ist es das Ziel, in einem Waggon mehrere Abteile mit im Wesentlichen gleichen Funktionen zu schaffen, insbesondere ungefähr gleichwertige, platzsparende Abteile für Einzelreisende zu schaffen und diesen mit einer Liege-, Sitz- und Stehmöglichkeit in jedem Abteil eine gute Eignung sowohl für Tages- wie für Nachtstrecken zu geben. Der als beengt empfundene deutsche Schlafwagentyp WLAs4üge 50 wies 20 Betten beidseitig entlang der Außenwände, daneben je einen Umkleidebereich/Abteilflur und in der Mitte einen Korridor auf, mithin eine Fünfteilung der Waggonbreite, wobei der Korridor nach je einer Abteillänge im Zick-Zack verlief.

Teilweise wird der Raum unter- (DE000000423438) bzw. oberhalb (DE000000330168, DE000000452269 und DE000000472401) des Korridors genutzt, womit lediglich im Liegen nutzbare Bereiche mit eingeschränkter Höhe erschlossen werden, wobei ein Zugang mit Leitern meist vom unteren Teil der Abteile aus erfolgt, der vorzugsweise auch als Sitzbereich fungiert, teilweise mehr den Charakter eines Leiterschachts mit Umkleidemöglichkeit hat. Weitere Bauweisen beruhen auf einem umständlichen Umbau von Abteilumgrenzungen zwischen der Tages- und Nachtnutzung.

Bekannt ist auch die Anordnung unterschiedlicher Wagenklassen bzw. Abteilkategorien mit klarer Trennung in aufeinanderfolgenden Längsabschnitten eines Waggons oder in unterschiedlichen Etagen.

Der Umbau der zusammen vier Sitz- und Rückenlehnen-Polster zweier gegenüberliegender Sitze zu einer Liegefläche je Sitzpaar ist aus deutschen Fernreisezügen und der US000004018166 bekannt. Eine Aufteilung der Zugquerschnitts in vier nebeneinanderliegende Funktionsbereiche ist bereits bei üblichen Abteilen oder bei Großraumwagen mit 2+1-Bestuhlung sowie in weiteren bekannten Ausprägungen gegeben.

Die meisten bekannten Ausführungen vermeiden Betten vor den Fenstern, obwohl diese Anordnung heute bei hohen Dämmwerten der Fenster und ohnehin nicht zu öffnenden Fenstern unproblematischer wäre.

### Zentrale Merkmale

Ein Grundgedanke der Erfindung ist eine Mischung vorzugsweise von Abteilen mit eigenem Steh- und Umkleidebereich, von gestapelten Kabinen ohne Stehmöglichkeit und von zum Korridor hin offenen Sitzgelegenheiten in enger Nachbarschaft. Damit wird der Korridorbereich durch die unterschiedlichen Abteiltypen in unterschiedlichem Maße beansprucht, und in der Summe weder überlastet noch unterbeansprucht. Mehrere bevorzugte Ausführungen beruhen auf einer Aufteilung der Waggonbreite in vier Streifen, von denen einer für zweisitzige und in Einzelkabinen umwandelbare Abteile, einer für den Korridor und die beiden übrigen für Abteile mit Schlafplätzen in Längsrichtung und einen zugehörigen Abteilflur bzw. Ankleidebereich genutzt werden, wobei sich letztgenannter Abteilflur in verschiedenen Ausprägungen lediglich auf einen Teil Ihrer Länge erstreckt. In möglichen Varianten nehmen Sitzgruppen drei Streifen ein, anderswo Sanitärräume zwei Streifen. Untervarianten ergeben sich durch Vertauschen der Abfolge der Streifen, insbesondere den Seitenwechsel der exzentrisch innenliegenden Korridorlage und entsprechend Seitentausch der Abteilkategorien, sowie durch außenliegende Abteilflure. In einer mit der Längsausrichtung der Kabinen gut vereinbaren Ausführungsform geht der Hauptkorridor durch den Zug mehrfach um einige Stufen auf und ab, um den Zugang zu weiter oben gelegenen Abteilen bzw. Kabinen zu erleichtern. In diesem Fall erfolgt der Abzweig bzw. Zugang vom Korridor zu Abteilen in der an sich anderen Etage je nach Ausprägung jeweils nach bzw. für zwei Abteillängen oder in Kopplung zweier derartiger Abzweigungen, so dass eine Höhenänderung des Korridors vier Abteillängen in der anderen Etage erschließt.

### Mischung von Abteiltypen und Grundrissgestaltung in einem Stockwerk

Gemäß Anspruch 1 sollen (a) Abteile mit einem als Eingangs- und Umkleidebereich nutzbaren Bereich mit Stehhöhe (Abteilflur), und (b) Abteile ohne Stehhöhe in räumlicher Nähe gemischt werden. Erstere sind vorzugsweise mit 2 oder 3 übereinander gelegenen Stockbetten vorstellbar, die im Grundsatz zusammen die gleiche Höhe wie der Abteilflur ausschöpfen, und sind bei hochgeklapptem oberem Bett auch als komfortable Einzelkabinen nutzbar. Bei der zweiten Kategorie handelt es vorzugsweise um übereinander gestapelte Kabinen, deren Grundfläche in der Schlafposition ganz oder weitgehend von der Liegefläche eingenommen wird, so dass ein Einstieg in die Liegefläche direkt aus dem Korridor des Waggons erfolgt. Letztere werden zur besseren Unterscheidbarkeit von Normalabteilen in der Beschreibung jeweils als Kabinen bezeichnet, in den Ansprüchen hingegen als Abteile mit den entsprechenden Eigenschaften.

Solche Schlafkabinen mit Direktzugang vom Korridor des Waggons zu den Liegeflächen ermöglichen vorzugsweise Einzelreisenden ein Schlafen ohne Zimmernachbarn mit geringem Platzbedarf, bei genügender Breite eignen sich auch für Paare. Die getrennten Kabinen entstehen ggf. erst durch Umklappen eines Bettes und Herstellen einer Liegefläche in einem vorher als 2er-Sitzabteil genutzten Raum mit Stehhöhe. Werden solche Abteile zur Einzelnutzung gebucht, bleibt das obere Bett hochgeklappt und unten entsteht eine das Abteil weitgehend ausfüllende Liegefläche, über der ggf. Stehhöhe gewährleistet ist, während sich die Höhe des Schlafbereichs bei Nutzung durch 2 Personen auf beide aufteilt. Die beiden Abteil- bzw. Kabinentypen liegen vorzugsweise (a) bei Querorientierung der Betten direkt nebeneinander oder (b) sind bei Längsorientierung der Betten lediglich durch den Korridor getrennt.

Die anspruchsgemäße Mischung unterschiedlicher Reisemöglichkeiten auf engem Raum hat nun den Vorteil, dass sich ein Teil der Reisenden sofort nach Betreten des Zuges in seine abgeschlossenen Abteile mit Abteilflur zurückziehen kann. Die Reisenden mit kabinenförmigen Schlafplätzen halten sich erwartungsgemäß länger bzw. häufiger im Korridor auf. Ihre Anzahl entlang eines bestimmten Gangabschnitts ist geringer als bei ausschließlicher Kabinenbelegung eines Waggons, so dass eine Übernutzung des Korridors ebenso vermieden wird wie leere und damit nicht effektiv genutzte Gänge bei klassischen Schlafwagenwaggons, in denen alle Reisenden über einen Abteilflur verfügen.

Gleichzeitig ergibt diese Mischung bei Längsausrichtung eine gute Ausnutzung üblicher Zugbreiten bei angenehmer Breite von zwei Betten (je ca. 80 cm), Abteilfluren und Korridor (je ca. 55 cm). Die beiden Grundtypen können sich auf den gegenüberliegenden Seiten des Korridors befinden, und jeweils zwei oder drei gestapelte Kabinen dieselbe Höhenlage aufweisen wie die konventionellen Abteile und der Korridor. Diese vier Streifen können durchweg einheitlich angeordnet werden, mit den Kabinen auf der einen Außenseite, dann dem durch eine Wand getrennten Korridor, der somit exzentrisch innenliegend verläuft, nach einer weiteren Wand die Abteilflure und schließlich die Stockbetten der Abteile an der anderen Außenwand. Bei Doppelstockwagen können zwei derartige Etagen übereinander liegen. Es gibt jedoch zahlreiche Variations- und Kombinationsmöglichkeiten: Die Abteilflure können ganz oder teilweise auf der Außenseite sein, um im Sitzen einen besseren Ausblick zu ermöglichen. Abteile mit Abteilflur bzw. Kabinen können die Seite wechseln und damit auch der innenliegende Korridor. Ebenso ist ein Wechsel zwischen innenliegendem zu außenliegendem Abteilflur möglich. Bei zweistöckigen Waggons ist eine räumliche Verschränkung der Abteile beider Etagen dadurch möglich, dass ein Bereich unterhalb der Betten oder ein Teil des Abteilflurs der oberen Etage für zusätzliche Kopffreiheit über Standflächen oder über Betten der unteren Etage genutzt wird. Weitere Gestaltungsmöglichkeiten ergeben sich durch L-förmige Abteile, durch Höhenvariation im Korridor, durch Sitzgruppen oder weitere Variationen.

An Stelle von geschlossenen Kabinen kommen auch zum Korridor hin nur durch Vorhänge abgegrenzte Liegen in Betracht, die also den Korridor noch mehr wie einen Abteilflur nutzen. Dies ist bei beidseitiger Längsanordnung unter der Bezeichnung Kajütliegewagen bekannt, und hat dann den zusätzlichen Nachteil einer direkten Sichtbeziehung und Schallausbreitung zwischen Personen und ggf. Schnarchern auf beiden Seiten des Korridors, ohne die Chance einer Schallabsorption zwischen ihnen. In einer erfindungsgemäßen Bauweise befinden sich solche zum Korridor offene und von dort zu besteigende Liegeplätze bzw. offene Kajüten (17) lediglich auf der einen Seite des Korridors, auf der anderen Seite und damit in unmittelbarer Nähe sind Abteile (5, 8) mit festen Umgrenzungen, vorzugsweise solche mit Stockbetten und einem Bereich mit Stehhöhe (Abteilflur) neben den Liegeflächen (6) innerhalb des Abteils (5). Damit verfügt die Hälfte der Bettplätze über ein privates Abteil mit Abteilflur, und das ohne zusätzlichen Platzbedarf gegenüber beidseitigen Kajütliegeplätzen. Auch hierbei erfolgt die Nutzung des Korridors zu unterschiedlichen Zeiten: Die Nutzer der Kajütliegeplätze stehen i.d.R. einige Zeit vor Ankunft des Zuges auf und benötigen dann etwas mehr Platz im Korridor zum Herausklettern und ggf. Umkleiden, während die Fahrgäste in geschlossenen Abteilen diese nicht längere Zeit vor Ankunft des Zuges zu verlassen brauchen. Der gleiche Vorteil wird auch erreicht, wenn bei seitlichem Korridor quer zur Fahrtrichtung orientierte Kabinen bzw. Kajüten mit Abteilen gemischt werden. Längs entlang des Korridors erstreckte Kajüten bzw. Kabinen bieten jedoch bessere Gelegenheiten zum Ein- und Ausstieg und sind besser in Sitzbereiche umzuwandeln.

Offene Kajütliegeplätze können sich auch mit geschlossenen Kabinen abwechseln (neben den Abteilen mit Abteilflur). Prinzipiell könnte der Korridor zeitweilig mit quer orientierten Vorhängen abgeteilt werden, um den Kajüten-Fahrgästen mehr Privatsphäre beim Umkleiden im Stehen zu gewährleisten. Größerer Längsverkehr durch den Korridor, wie er durch Reisende ohne Platzreservierung bzw. mit Einstieg am falschen Eingang bzw. durch Speisewagen zustande kommen könnte, ist bei verstärkter Nutzung des Korridorbereichs durch Kajüten-/Kabinenbenutzer zu vermeiden, und bei Halten sollten die Reisenden in Abteilen mit Abteilflur möglichst zuerst einsteigen.

Der Eckbereich zu Eingängen ist wegen der Zugänglichkeit von zwei Seiten für gestapelte 2er-Kabinen besonders geeignet.

Es ist auch eine erfindungsgemäße Ausführung mit seitlichem Korridor, Ausrichtung der Betten quer zur Fahrtrichtung und einer Abfolge von normalen Sitz-, Schlaf- und/oder Liegewagenabteilen und gestapelten Kabinen möglich. Diese Bauweise bietet sich vor allem beim Umbau bestehender Waggon an. Beispielsweise kann die Breite eines Sitz- oder Liegewagenabteils von knapp zwei Metern in eine Einzelkabine mit rund 70 cm Breite und eine Doppelkabine mit der restlichen Breite umgewandelt werden; davon können dann zwei oder drei Kabinen gestapelt werden und im Raum eines umgebauten Abteils könnten bis zu neun Personen mit besser gewahrter Privatsphäre übernachten. Wenn neben dem Bereich mit Kabinen normale Sitzabteile oder Liegewagenabteile mit Abteilflur verbleiben, können diese neun Personen auch in den dortigen Korridorbereich ausweichen.

Besonders vorteilhaft ist die in Anspruch 2 formulierte, weitere Mischung innerhalb des Waggons mit gesondert belegbaren Sitzplätzen, die nach ihrer Ausführung und Anordnung nicht nur als Notsitze zu verstehen sind und vorzugsweise in Form kleiner Gruppen von ca. vier bis acht Plätzen verteilt werden können. Vorzugsweise ist die Anzahl der Sitzplätze deutlich geringer als die Zahl der Bettplätze ohne zugehörige Sitzgelegenheit. Die Sitzplätze können dann einzeln vermarktet und reserviert werden, vorzugsweise an Tagen mit hoher Verkehrsnachfrage. Soweit wenigstens auf Teilen der Fahrtstrecke nicht alle Sitzplätze von Reisenden ohne Schlafplatz belegt sind, können die Sitzplätze am Abend und Morgen auch von Reisenden mit Schlafplatzbuchung vorübergehend genutzt werden, was bei einem gesonderten Sitzwaggon nicht so unkompliziert möglich wäre. Dabei kann derselbe Sitzplatz von unterschiedlichen Fahrgästen genutzt werden, die ihre Liegeplätze zu verschiedenen Zeiten aufsuchen oder verlassen, weil sie z.B. an unterschiedlichen Halten in den Zug ein- oder aussteigen oder sie nach dem Aufwachen der zweiten Person im Abteil wieder in das eigene Abteil zurückkehren und dieses ggf. in Sitzposition umbauen. Daher kann bei Verzicht auf eine feste Zuordnung zu bestimmten Abteilen auch mit geringerer Zahl der Sitzplätze eine gute Bedarfsdeckung, Ausweichmöglichkeit und Variabilität erreicht werden. Durch eine zweckmäßige Gruppierung von mehreren Sitzplätzen mit Orientierung zum Korridor kann die flexible Zuordnung noch unterstrichen werden, ein Treffpunkt der Reisenden gebildet werden, und bei teilweiser Belegung mit Sitzreisenden können sich diese nachts auf benachbarten Sitzen zum Schlafen ausstrecken.

Soweit ein Teil der 2er- bzw. 3er-Abteile mit Abteilflur private oder von zwei Abteilen erreichbare, halbprivate Sanitärräume bzw. Toiletten aufweist, werden diese somit von mindestens zwei Reisenden gemeinsam genutzt, und können daher gelegentlich länger besetzt sein. Die Abteilnachbarn können dann auch "öffentliche" Toiletten aufsuchen, die bei andersartigen Sitz- bzw. Liegemöglichkeiten im Waggon ohnehin benötigt werden; auch insoweit hat also die Mischung von Abteiltypen in einem Waggon Vorteile.

### 1 ½-stöckige Waggons

Bei einer "Stapelung" von Abteilen mit Stehhöhe mit je einem kabinenartigen Abteil ohne Stehhöhe übereinander erscheint es auf den ersten Blick praktischer, die niedrigeren Kabinen unten einzubauen und die höheren Abteile darüber, um in beiden Fällen geringere Differenzen der Bodenhöhe überbrücken zu müssen, wenn sie von demselben Korridor aus zugänglich sind. Nachteilig wäre dabei der Eindruck, zu den unteren Kabinen in eine niedrige Kiste am Fußboden kriechen zu müssen. Befände sich der Fußboden von unten angeordneten Kabinen sogar unterhalb des Korridorniveau, so wäre zwar das dann obere Abteil mit wenigen Stufen erreichbar, aber es entstünde der Eindruck, zu den Kabinen "in ein Loch einzusteigen" und man brächte noch zusätzlich einen Raum, um aus dem Stehen im Korridor in die untere Kabine zu gelangen, da eine Klappe im Fußboden des Korridors nicht ernsthaft in Betracht kommt.

Stattdessen können nach Anspruch 3 z.B. 2er-Abteile **248** mit Doppelstockbetten etwas unter dem Niveau des Korridors **247** angeordnet werden, die z.B. über einige quer zum Korridor verlaufende Stufen für je zwei dieser Abteile erreicht würden. Kabinen mit mäßiger lichter Höhe **246** könnten darüber angeordnet werden. Wäre der Fußboden von 2 m hohen Abteilen mit Doppelstockbetten z.B. 80 cm unterhalb des Korridors, wären die Kabinen ca. 1,20 m über das Niveau des Korridors erhöht. Sowohl Kabinen wie Korridor können dann die verbleibende Deckenhöhe des Wagenkastens ausnutzen. Die tatsächlich zu überwindende Höhendifferenz aus dem Stehen im Korridor zu den Kabinen ist dann kaum größer, als es bei Kabinen unmittelbar über dem Fußboden der Fall wäre, denn in den oben angeordneten Kabinen wird man sich nach dem Hochklettern ohnehin nicht aufrichten. Die Decke der unteren Abteile muss im Bereich der nach unten führenden Zugangsstufen etwas angehoben werden. Der entsprechende Lichtraum nahe des Korridors oberhalb der Stufen zu den unteren Etagen fällt also oben in den Kabinen weg; die oberen Kabinen bzw. ihre Liegeflächen sind somit auf der dem Zugang abgewandten Seite (bei Querorientierung die dem Gang abgewandte Seite) etwas breiter.

Dieses Prinzip kann auch bei sonst zweigeschossigen Zügen mit Waggonübergang in der oberen Etage lediglich im Bereich der Drehgestelle angewendet werden. Bei der Treppe zum Obergeschoß kann auch gleich der Zugang zu einem Abteil mit Stehhöhe auf mittlerer Höhe zwischen Ober- und Untergeschoß von der ohnehin vorhandenen Treppe aus erfolgen. Bei dem Zugang von der Treppe wirkt es sich vorteilhaft aus, dass dieses untere Abteil einen Bewegungsraum mit Stehhöhe aufweist, so dass die Benutzer dieses schnell betreten und nicht lange auf der Treppe im Weg stehen. Der nur kletternd mögliche Zugang zu der darüber liegenden Kabine erfolgt dann vom oberen Korridor aus, wo sich der Verkehr schon etwas verteilt hat.

### L-Form von Abteilen mit längs orientierten Betten und Nutzung des ausgesparten Raums

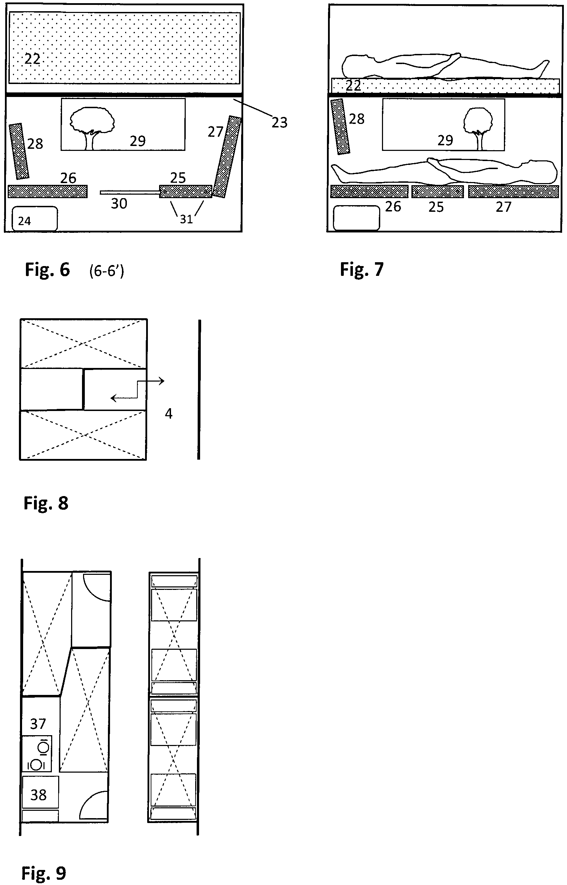

Um in einem Abteil für zwei Personen die wesentlichen Funktionen des Liegens in einem Bett bzw. in Stockbetten, des Sitzens mit nach unten abgestellten Füßen und des Eintretens und Umkleidens im Stehen zu gewährleisten, braucht der im folgenden Abteilflur genannte Standbereich neben der Liegefläche nicht die volle Länge der Betten einnehmen. Mit einem gegenüber der Bettlänge verkürzten Abteilflur würde das Abteil in seiner generellen Grundrissgestalt eine T-Form oder vorzugsweise eine L-Form (Winkelform) aufweisen. Der Abteilflur grenzt an einer Seite an die Betten, womit grundsätzlich drei weitere Seiten für Türen zur Verfügung stehen, die insbesondere zum Waggon-Korridor, zu einem Sanitärraum oder zum Nachbarabteil führen könnten. Man kann jedoch nicht einfach zwei gleiche winkelförmige Abteile zu einem Rechteck zusammenzufügen, bzw. wäre dann einer der Abteilflure nicht vom Korridor aus zugänglich (Fig. 8).

Mischt man winkelförmige Abteile erfindungsgemäß im selben Waggonbereich mit anderen Typen, ergeben sich zusätzliche Ausprägungsmöglichkeiten. Bei einer vorteilhaften Ausführung wird jeweils ein Paar solcher Abteile mit längs zur Fahrtrichtung entlang einer Außenwand des Waggons orientierten Betten angeordnet, so dass die beiden Abteilflure spiegelbildlich an der jeweils abgewandten Seite des Abteilpaars liegen; mithin die beiden Abteile spiegelbildlich mit den Schmalseiten zueinander liegen und zusammen eine breite U-Form ergeben. Damit verbleibt in der Mitte beider Abteile entlang des Korridors eine Nische bzw. ein nutzbarer Raum von der Breite bzw. Tiefe des Abteilflurs, bzw. etwas mehr im Fall von schmäleren Fußenden der Betten in dieser Nische.

Dieser bei zwei Abteilen "eingesparte" Raum kann dann andere, vom Korridor aus zugängliche Nutzflächen aufnehmen. Nimmt der Abteilflur nur knapp die halbe Länge eines Bettes ein, können dort weitere, gestapelte Betten **17** eingefügt werden, die direkt vom Korridor bestiegen werden. In Betracht kommen vor allem zum Korridor offene Schlafkajüten, da abgeschlossene Schlafkabinen innenliegend wären. Der zwischen zwei winkelförmigen Abteilen mit kurzem Abteilflur verbleibende Freiraum kann in einer weiteren bevorzugten Ausführung ein Sitzpaar in vis-a-vis-Position mit und gegen die Fahrtrichtung aufnehmen. Ein Ausziehen der Sitze zur Herstellung einer Liegefläche wäre möglich, zum Umbau würden die Reisenden in den Korridor ausweichen. Ein weiteres Bett könnte oberhalb des Sitzpaars vorgehalten und ggf. abgeklappt werden. Auch eine Treppe in eine andere Etage wäre in solchen Nischen möglich. Des Weiteren könnte die Nische drei oder bei flugzeugüblicher Stuhlbreite vier Sitze quer zur Fahrtrichtung aufnehmen. In bevorzugter Ausführung nehmen Bett, Abteilflur bzw. Nische und Korridor knapp 3/4 der gesamten Waggonbreite ein.

In einer erfindungsgemäßen Anordnung wird die Breite des Waggons in vier Streifen aufgeteilt, und auf der den Abteilfluren gegenüberliegenden Seite des Korridors verbleibt genügend Platz für weitere Kabinen mit längs angeordneten Betten oder einem zu Betten umwandelbaren vis-a-vis Sitzpaar. Soweit die Oberseite des Wagons bzw. das Lichtraumprofil hier lediglich eine für zwei Stockbetten unzureichende Höhe belässt, wäre hier eine Einzelschlafkabine gut unterzubringen.

Einschließlich des Abteilflurs reicht die Breite der L-förmigen Abteile bis etwa zur Mittelachse des Waggons. Es ist möglich, zwischen den Breitseiten je zweier Abteile WCs bzw. Naßzellen **13, 14** anzuordnen, wobei in bevorzugter Bauweise jeweils eine Naßzelle **13** von beiden benachbarten Abteilen zugänglich und somit halbprivat nutzbar wäre, wobei der WC-Sitz an der Außenwand quer zur Fahrtrichtung stünde.

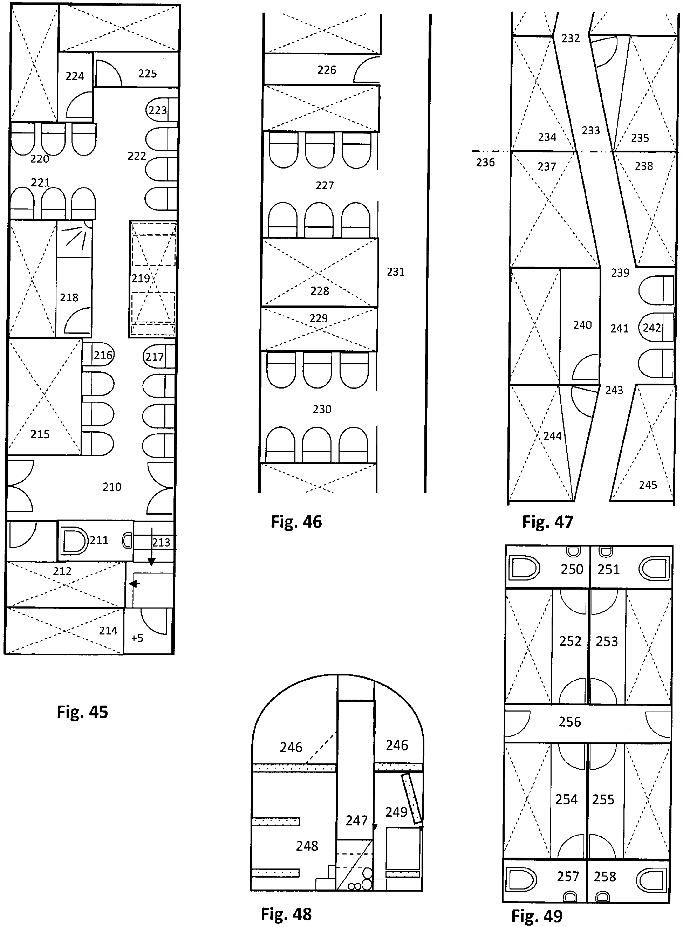

Ein verkürzter Abteilflur kann auch wie in Abteil **218** (Fig. 45) Platz für eine dem Abteil zugeordnete Dusche schaffen (Anspruch 14). Der Abteilbereich ohne Dusche ist dann ebenfalls L-förmig. Dies nutzt den Umstand aus, dass neben der eigentlichen Dusche auch ein trockener Bereich mit Stehhöhe zum Aus- und Ankleiden und Vorhalten des Handtuchs benötigt wird, wofür nun der Abteilflur genutzt werden kann. Einzelreisende mit fremdem Abteilnachbarn könnten sich auch unter der Bettdecke entkleiden. Damit finden abends die Vorgänge Auskleiden der Tagesgarderobe - Duschen - Ankleiden der Schlafwäsche (bzw. morgens umgekehrt) im privaten Bereich des Abteils statt, und der Korridor muss weder mit Wechselkleidung noch in Schlafwäsche betreten werden. Zudem konzentriert sich das Duschen auf kurze Zeit nach Abfahrt bzw. vor Ankunft des Zuges, was neben hygienischen Aspekten gegen gemeinschaftliche Duschen je Waggon spricht. Die Bauweise ist mit gemeinschaftlichen Toiletten vereinbar, dies bietet sich aus Kostengründen an, weil Toiletten im Verlauf der nächtlichen Fahrtzeit gleichmäßiger als Duschen ausgelastet werden, die Aufenthaltsdauer je Benutzer kürzer ist und weil Platzbedarf, technischer Aufwand und das Störungspotential (Spülgeräusche, Gerüche) eines WCs höher sind als die einer Dusche. Von Reisenden mit viel Gepäck kann eine private Duschzelle zudem zum wenigstens vorübergehenden Abstellen desselben genutzt werden. Abmessungen der Duschen von etwa 60 bzw. 70 cm können bei vierstreifiger Aufteilung der Waggonbreite mit geringfügiger Verschmälerung der Bettbreite bzw. des Flurs oder gegenüberliegender Abteile erreicht werden. Eine Trapezform der Dusche und damit der Nische neben der Dusche erleichtert das Beziehen der Betten.

Bleibt die Nische zwischen L-förmigen Abteilen zur Korridor offen und wird sie quer zur Fahrtrichtung bestuhlt **18,** d.h. mit Blickrichtung und Beinen zum Korridor, kann in diesem Abschnitt der Bereich auf der anderen Seite des durch den Waggon verlaufenden Korridors entlang der anderen Außenwand ebenfalls bestuhlt werden **19,** und damit ein Ausblick aus einem dahinterliegenden Fenster ermöglicht werden. Werden bei einer typischen Waggoninnenbreite von ca. 265 cm ca. 80 cm für den Fußraum der längs angeordneten Betten genutzt, bleibt ein Freiraum, der für quer zur Fahrtrichtung, vis-a-vis zueinander angeordnete Sitze gerade ausreichend ist. Die Füße ragen dann in den Korridor, der allerdings bei Nachtzügen mit weniger Zwischenhalten weniger frequentiert wird und bei zweistöckigen Zügen stellenweise eine "Sackgasse" sein kann.

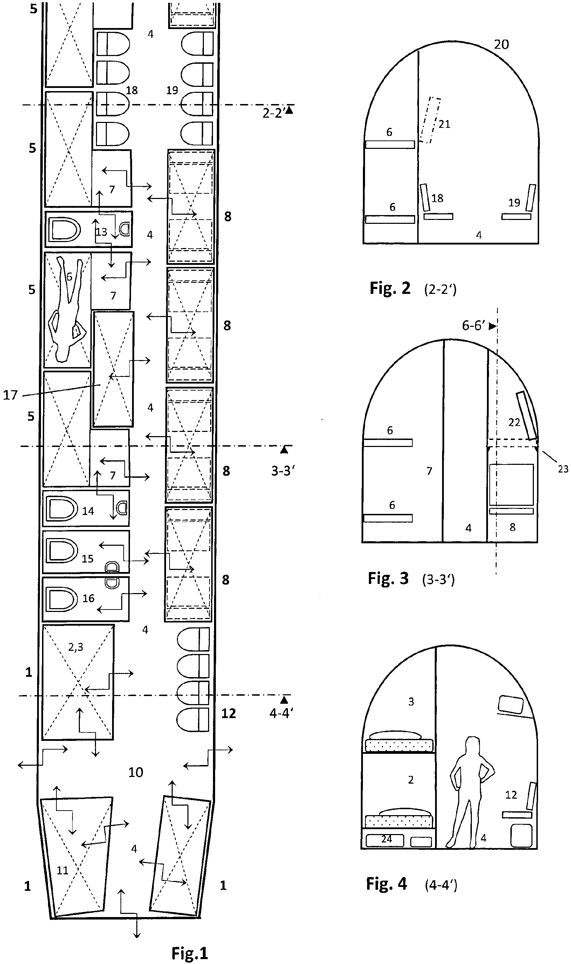

Allgemeiner formuliert handelt es sich wie in Fig. 2 sichtbar um die Kombination eines Bereichs mit Quersitzen mit "dahinter" angeordneter Schlaffläche. Insbesondere neben dem Eingangsbereich kann eine Schlaffläche "hinter" einer Sitzgruppe auch von ihrer Schmalseite erreicht werden, ohne dass ein Abteilflur entlang eines Teils der Bettlänge einen Zugang vermittelt. Bei entsprechender Länge der quer orientierten Sitzgruppe kann sich dort auch je ein Reisender ausstrecken.

Sitzgelegenheiten können auch auf an sich konventionelle Weise auf der vollen Breite des Wagens mit Orientierung in bzw. gegen Fahrtrichtung angebracht werden, dies jedoch nur in einem kurzen Abschnitt des Waggons wie in Fig. 45, 46. Der außermittig innenliegende Korridor erleichtert bei Nutzung der gesamten Wagenbreite für Sitze eine 3+1-Anordnung (drei Sitze nebeneinander auf einer Seite des Korridors, ein Einzelsitz je Reihe auf der anderen Seite), die im Vergleich zur 2+2- Anordnung bei Mittelgang den Vorteil hat, dass es drei Sitzmöglichkeiten je Reihe ohne unmittelbaren Nachbarn gibt, wenn der Mittelplatz des 3er-Blocks frei bleibt. Bei geringer Auslastung ergeben die drei Sitze nebeneinander einen annehmbaren Notschlafplatz. Zusätzliche Liegeflächen oberhalb der Sitze wären prinzipiell möglich. Eine Queranordnung der Sitze **222** auf der schmaleren Seite kann die Belegungsdichte noch erhöhen und unterstützt die Abwechslung bei der Sitznutzung und die Kommunikation zwischen den Reisenden.

Eine L-förmigen Kabinen ähnliche Raumausnutzung kann auch bei annähernd quaderförmiger Abmessung erreicht werden, wenn bei ihnen in einem Teil der Länge des Abteilflurs die Stehhöhe von unten oder von oben eingeengt wird, um für Funktionen in einer unteren ober oberen Etage Platz zu schaffen, so dass die Betten und der Teil des Abteilflurs mit voller Stehhöhe zusammen einen L-förmigen Grundriß haben. Ist zusätzlich im hinteren Bereich der (oberen) Liegefläche die Höhe reduziert, kann dieser Bereich dann in erster Linie als Fußraum verstanden werden. Dort kann abends und nach dem Aufstehen auch das Bettzeug untergebracht werden. Wenn die Einengung der verfügbaren Höhe in diesem Fußraum ein Hochklappen der Bettes verhindert, sollte das obere Bett ggf. geteilt sein, um den vorderen Teil einzeln hochklappen zu können, um in diesem Abschnitt auf dem unteren Bett aufrecht sitzen zu können.

### Schaffung und Nutzung von Höhenabstufungen des Korridors zur Erschließung von zwei Ebenen

Waggons können Abteile in zwei Ebenen aufweisen, jedoch nur einen Korridor. Bekannt sind Lösungen mit quer zur Fahrtrichtung angeordneten steilen Treppen oder Leitern, die von einem Außenkorridor zu meistens je 2 Abteilen in einer zweiten Etage führen und überwiegend quer zur Fahrtrichtung angeordnete Betten aufweisen. In einer realisierten Bauweise mit mittlerer Höhenlage des Korridors führen gekoppelte Treppen zu je zwei Abteilen nach unten und oben, wobei die Betten der oberen Abteile teilweise über den Korridor ragen. Stattdessen bzw. ergänzend kann erfindungsgemäß auch der Korridor selbst einen Auf- und Abwärtsverlauf vornehmen, um an mehreren Stellen eines Waggons näher an die obere bzw. untere Etage zu gelangen. Diese Höhenabstufung nutzt in bevorzugter Bauweise die ohnehin vorgeprägten Höhenabstufungen bzw. Treppen aus, die sich bei Doppelstockzügen durch die Höhendifferenz zwischen den oft niedrigen Eingängen und dem Übergang zum Nachbarwaggon oberhalb der Drehgestelle zwangsläufig ergeben bzw. die bei Bauweisen mit durchlaufenden Korridor im Obergeschoß in Form von Treppen zwischen den beiden Etagen notwendig sind, es werden aber zusätzliche Höhenänderungen des Korridorverlaufs vorgenommen.

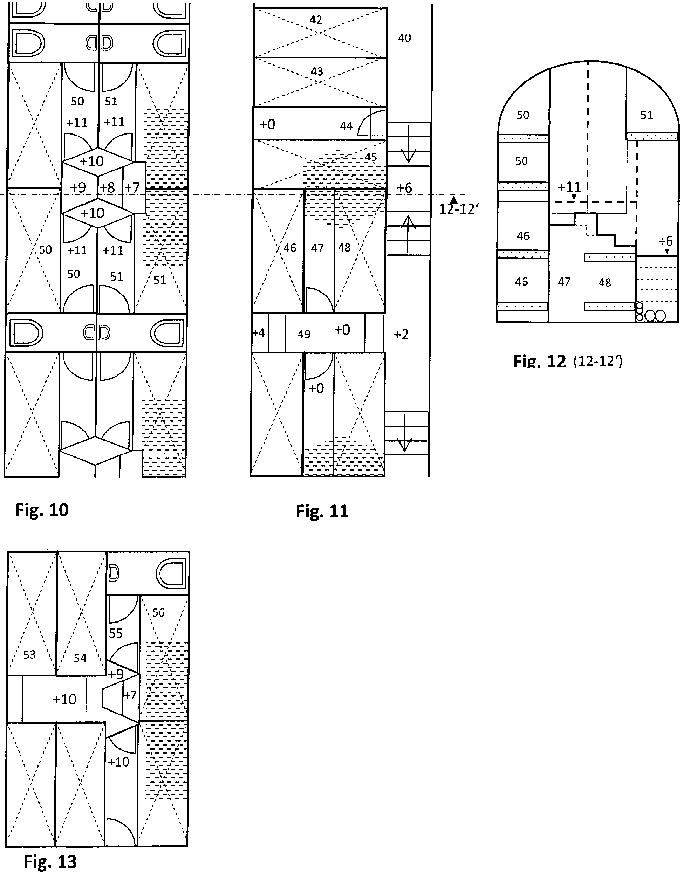

Möglich wäre insbesondere ein Anstieg bzw. Abstieg des Korridors im Wesentlichen innerhalb der Länge je eines Abteils (Anspruch 4). In bevorzugter Bauweise erfolgt dies bei innenliegendem, längs verlaufendem Korridor, bei dem in wesentlichen Abschnitten des Waggons beidseitig des Korridors Abteile bzw. Kabinen mit längs angeordneten Betten sind (Fig. 10 bis 21). Damit erhält man eine größere Längenerstreckung des Korridors entlang je eines Abteils als bei querstehenden Abteilen und es steht entsprechend je Abteil-Längserstreckung mehr Platz entlang des Korridors für den An- und Abstieg zur Verfügung. Die Höhe des Korridors würde vorzugsweise um deutlich weniger als die volle Geschoßhöhe variieren: Beispielsweise könnte mit drei eingefügten Trittstufen eine Höhendifferenz von ca. 80 cm erreicht werden. Ggf. kann auch mit Rampen eine Höhenvariation des Korridors erreicht werden, die dann kaum mehr als ca. 40 cm betragen würde. Weitere Teile der Höhendifferenz zwischen zwei Etagen können dann mit weiteren Treppenstufen quer zum Korridor ähnlich der an sich bekannten Bauweisen und ggf. noch weiteren Stufen innerhalb der abgeschlossenen Abteilbereiche bzw. an der Abteiltüre überwunden werden. Vorzugsweise würden Abteile bzw. Kabinen mit vier Grundriss-Positionen für Betten von jeweils einem Hochpunkt bzw. Tiefpunkt des Korridors aus erreicht werden.

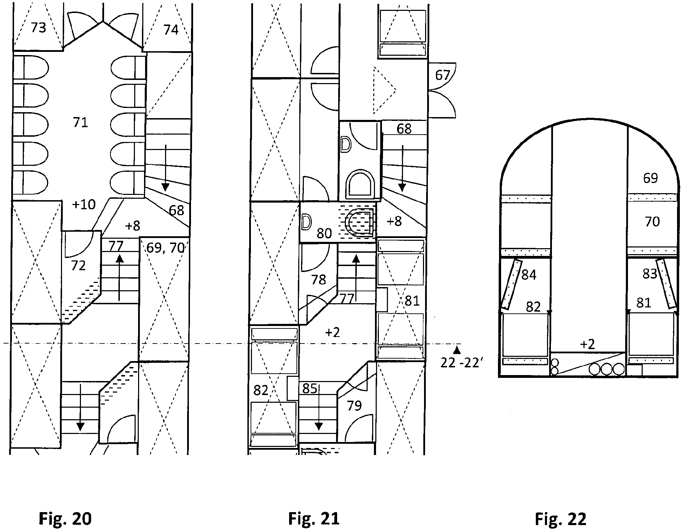

Dabei kann es zweckmäßig sein, wie in Figur 21 am Tiefpunkt auf der jeweiligen Schmalseite des Korridors zwei zu Kabinen umbaufähige Abteile etwas zueinander versetzt anzuordnen, um die Mitte dieser Abteile etwas näher an einen Tiefpunkt des Korridors zu platzieren, und dort gleichzeitig den Korridor die Seite wechseln zu lassen. Die Abstufung des Korridorverlaufs erleichtert auch den Zugang zu dem oberen Bereich solcher Abteile in der unteren Etage nach Umbau zur Liegeposition und macht ggf. zusätzliche Leitern dafür überflüssig. Oberhalb dieser Abteile wären dann auf der schmalen Seite neben dem Korridor vorzugsweise Kabinen möglich, deren Zugang im Bereich des Hochpunkts des Korridors vorzugsweise von ihrer Schmalseite erfolgt.

Auf der breiteren Seite neben dem Korridor können vorzugsweise Abteile mit Abteilflur untergebracht werden, von denen jeweils zwei über eine kurze Treppe quer zum Korridorverlauf erreicht werden. Bei den oberen Abteilen kommt wegen den Begrenzungen durch die Dachausrundung bzw. das Lichtraumprofil vorwiegend ein innenliegender Abteilflur in Betracht. Diese quer orientierte Treppe kann vorzugsweise bei unteren Abteilen auch zu einem Abteilflur entlang der Waggonaußenseite führen, womit dort im Sitzen nach außen gesehen werden kann. Bei außenliegendem Abteilkorridor wird ja grundsätzlich eine Zusatzlänge benötigt, um an dem dann innenliegenden Bett vorbeizukommen, was aber weniger Rolle spielt, wenn der Platz ohnehin für die quer orientierte Treppe benötigt wird. Die Mehrlänge kann wie in Fig. 9 mit einer Überlappung der Bettlängen mit dem nächsten Abteil derselben Etage wieder ausgeglichen werden, wenn dieses einen innenliegenden Abteilflur aufweist und dessen Abteilflur entsprechend verkürzt ist. Die Abteile würden dann von den der Überlappung entgegengesetzten Enden der Abteile betreten werden.

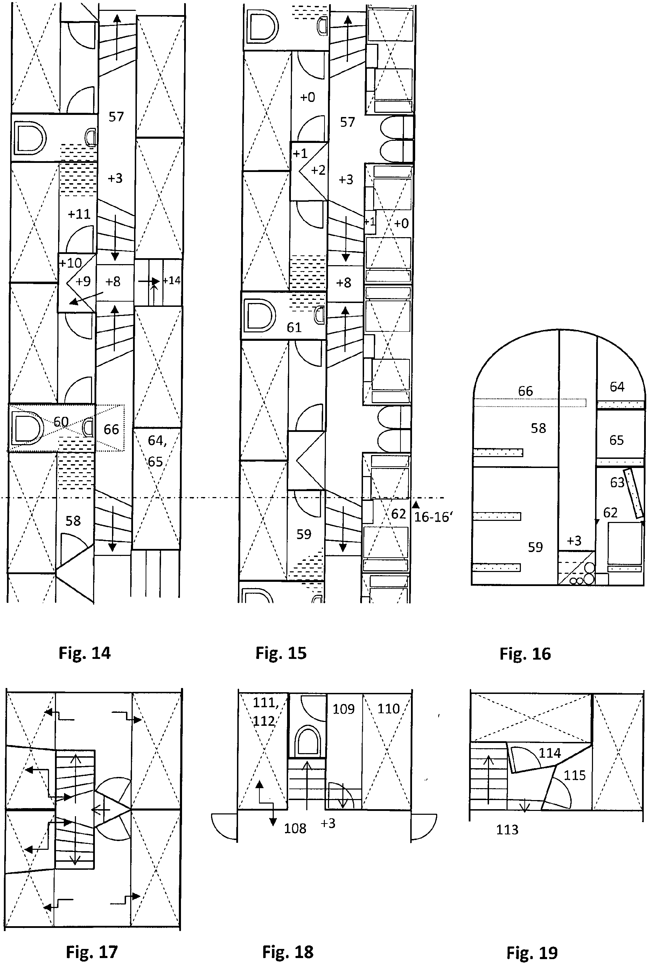

Auf der *schmaleren* Seite neben dem Korridor würden sich wie in Fig. 15 unten Abteile **62** befinden, in denen 2 Personen vis-a-vis sitzen können, die jeweils von einer niedrigen Stelle **57** des Korridors aus zugänglich sind. Diese sind vorzugsweise in zwei gestapelte, kabinenförmige Abteile umbaufähig. Darüber würden sich in zwei weiteren Ebenen kabinenförmige Abteile **64, 65** ohne Stehhöhe befinden, deren Zugang sich nahe eines höheren Bereichs **+8** des Korridorverlaufs befindet. Eine Umbaufähigkeit in Sitzabteile scheitet hier weitgehend aus, weil eine Zugangsmöglichkeit nur vor der Schmalseite bzw. in Nähe des einen Endes gibt - in der Mitte der Längserstreckung dieser Abteile verläuft der Korridor bereits wesentlich niedriger. Würde die gesamte Höhe der Kabinen **64** und **65** von einer Einzelkabine eingenommen, käme man zu einer weiter vorne als 1 ½-stöckig bezeichneten Situation.

Auf der *breiteren* Seite neben dem Korridor sind vorzugszugsweise in beiden Etagen Abteile (58, 59) mit Betten in Längsrichtung entlang der Außenwand und innenliegendem und Abteilflur. Der Platz für die zwischen dem Korridor und den Abteilen noch erforderlichen Stufen wird vorzugsweise durch eine Einschränkung des Raums der Abteilflure in dem jeweils von Abteileingang abgelegenen Ende geschaffen (Anspruch 5).

Wo sich der Korridor jeweils der Höhe der anderen Etage annähert, mithin von Korridor nicht direkt erschlossene Bereiche verbleiben, können vorzugsweise private Sanitärräume (60, 61) und technische Anlagen untergebracht werden, in der unteren Etage auch von außen zugängliche Räume.

Bei moderater Anhebung des Korridorverlaufs kann auch bei dessen Hochpunkt darüber noch Platz für ein Bett sein.

Eine Höhenvariation des Flures kann auch bei an sich eingeschossigen Zugwaggons dazu genutzt werden, die oberen Stockbetten bzw. die oberen Kabinen besser zu erreichen. Das gilt entsprechend bei einer Anordnung von Kabine ohne Stehhöhe in einer Ebene oberhalb von Abteilen mit Stehhöhe und vorzugsweise Doppelstockbetten in einer Variation der Bauweise gemäß Anspruch 3.

### Kurze, vorzugsweise gepaarte Stiegen zu Bereichen in der anderen Etage mit mind. zwei Bettlängen

Ein weiteres Gestaltungsprinzip von Waggons mit Abteilen in zwei Ebenen gemäß Anspruch 6 liegt darin, von dem in einer Etage verlaufenden Hauptkorridor Treppen bzw. Stiegen in die andere Ebene zu führen, die im Wesentlichen parallel zum Hauptkorridor verlaufen. Der Hauptkorridor ist vorzugsweise der anderen Etage bereits um einige Stufen "entgegengekommen". Von diesem Punkt des Korridors aus zweigen dann vorzugsweise zwei weitere, innenliegende Stiegen in entgegengesetzte Längsrichtungen des Waggons von dem eigentlichen Korridorverlauf ab. Dann kann man an zwei Grundrißpositionen seitlich jeder der Steigen und an weiteren Grundrißpositionen in Zugangsrichtung der Stiegen Betten anordnen. Der Raum am Ende der Stiege kann somit in beiden Fahrtrichtungen und auf beiden Seiten des Waggons von Betten umgeben sein, was zunächst vier Grundrisspositionen für Betten ergibt, die von jeder Stiege erschlossen werden. Eine Durchgängigkeit in der über die Stiege erschlossenen Etage ist anspruchsgemäß nicht gegeben, es handelt sich gewissermaßen um eine Sackgasse. Da keine weiterführende Verkehrsfläche vorhanden ist, kann in dem Zugangsrichtung der Stiege anschließenden Bereich die gesamte Waggonbreite in zwei Abteile mit Abteilflur und Stockbetten aufgeteilt werden. Werden je Etage zwei Betten gestapelt, werden dann je Stiege sechs Betten in drei Abteilen mit Stockbetten und zwei weitere Betten in gestapelten Kabinen erreicht.

Im Falle eines innenliegenden Korridors in der unteren Etage müssen vom oberen Ende der Stiege aus auch Abteilbereiche auf der anderen Seite des Korridors erreicht werden. Dies wird dadurch gewährleistet, dass der Korridor lediglich in Nähe des Fußpunkts der Stiegen ansteigt und somit am anderen Ende der Stiege bereits von der oberen Etage überbrückt werden kann.

Die Länge der Stiege entspricht vorzugsweise der Länge eines Bettes, abzüglich eines für den kleinen Flur in der oberen Etage verwendeten Platzes, der Anstieg im Korridor ist vorzugsweise etwas kürzer. in bevorzugter Bauweise gibt es auf der schmaleren Seite neben der innenliegenden der Stiege eine auf Fußbodenniveau der oberen Etage gelegene Kabine. Diese kann dann direkt von der Stiege aus bestiegen werden. Der von einer Stiege erschlossene Bereich kann aber auch zu geräumigeren Abteilen zusammengefasst werden.

Der Vorteil einer derartigen "Insel" bzw. Sackgasse in der zweiten Etage liegt darin, dass dort bis auf die Stiege selbst und einen Verteilflur die gesamte Waggonbreite als nutzbare bzw. vermietbare Abteilfläche zur Verfügung steht. Diese Breite kann dann u.a. auf zwei Bettpositionen und zwei Abteilflure aufgeteilt werden. Je Insel kann so ein zusätzliches Abteil mit Abteilflur anstelle von Kabinen geschaffen werden, um den Preis verkürzter Abteilflure im Bereich der Stiegen bzw. des angehobenen Abteilflurs.

Eine knapp bemessene Insel nimmt die Länge von zwei Betten ein. In diesem Teil der Waggonlänge umfasst der Platzbedarf für Verkehrsflächen in der unteren Etage die Gesamtlänge für den Korridor und etwas weniger als eine Bettlänge für die Stiege. Dazu kommt als Verkehrsfläche in der oberen Etage weniger als eine Bettlänge für die Stiege, ein Verteilerflur sowie der Platzbedarf oberhalb der Anhebung des unteren Korridors, aber kein durchgängiger Korridor. In der Summe ergibt das rechnerisch etwa denselben Platzbedarf für Verkehrsflächen wie bei zwei durchlaufenden Korridoren in zwei Etagen, für die zusammen vier Bettlängen benötigt werden. Der Raum oberhalb der Anhebung des Korridors bzw. unterhalb der Stiegen ist aber wenigstens als Stauraum nutzbar.

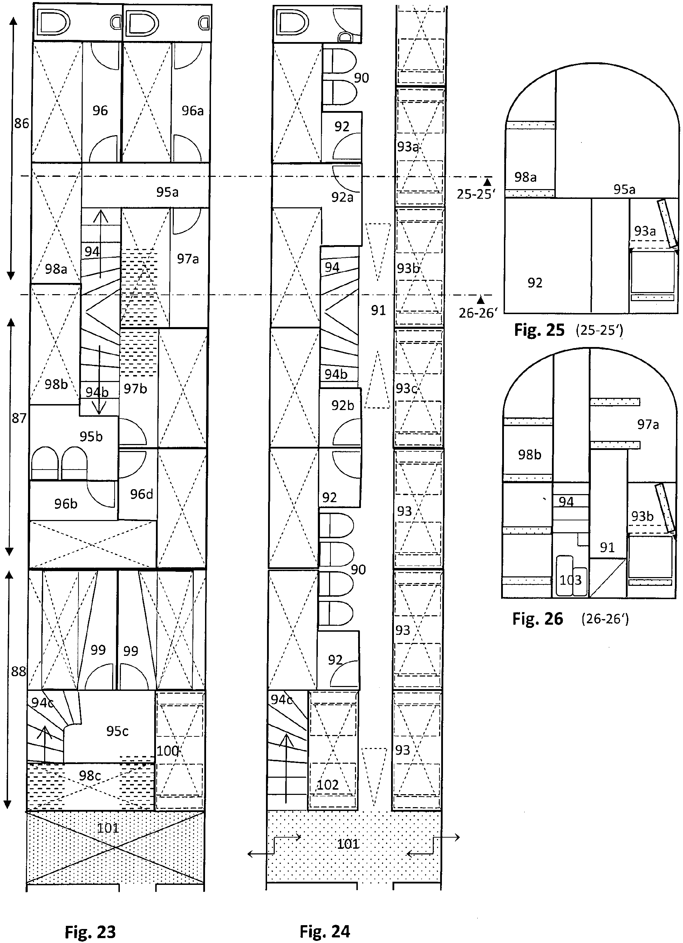

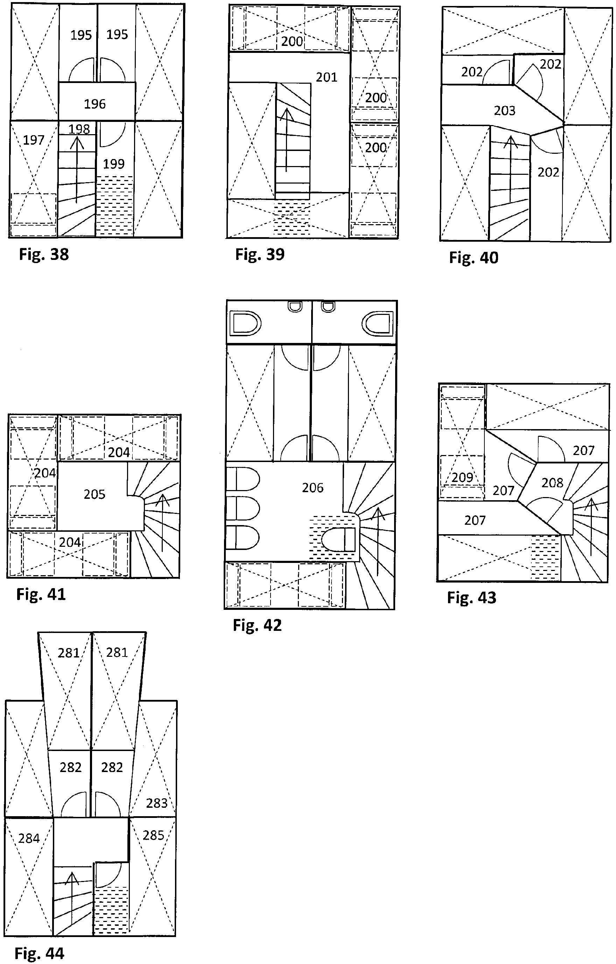

Andererseits wird bei konventioneller, zweistöckiger Bauweise auch an wenigstens an einer Stelle der Platz für eine notwendige Treppe benötigt, und dies dann zusätzlich zu den Korridorlängen. Bei länger erstreckten Abteilen auf der Insel vergrößert sich zudem der Vorteil durch die Einsparung des Korridors; dabei kann es sich u.a. um Suiten **182** handeln, die die gesamte Breite des (Ober-) Geschosses einnehmen und bereits dadurch eine besondere Qualität erreichen, um Abteile mit zwei aufeinanderfolgenden Bettlängen **(171/173)** oder um eine Verlängerung der einer Insel zugehörigen Länge lediglich um Sanitärräume (Fig. 23 oben, Fig. 42). Der Platzbedarf je Insel für die Stiege bleibt dabei derselbe, größere private Bereiche in den Inseln sparen hingegen mehr Korridorlänge ein.

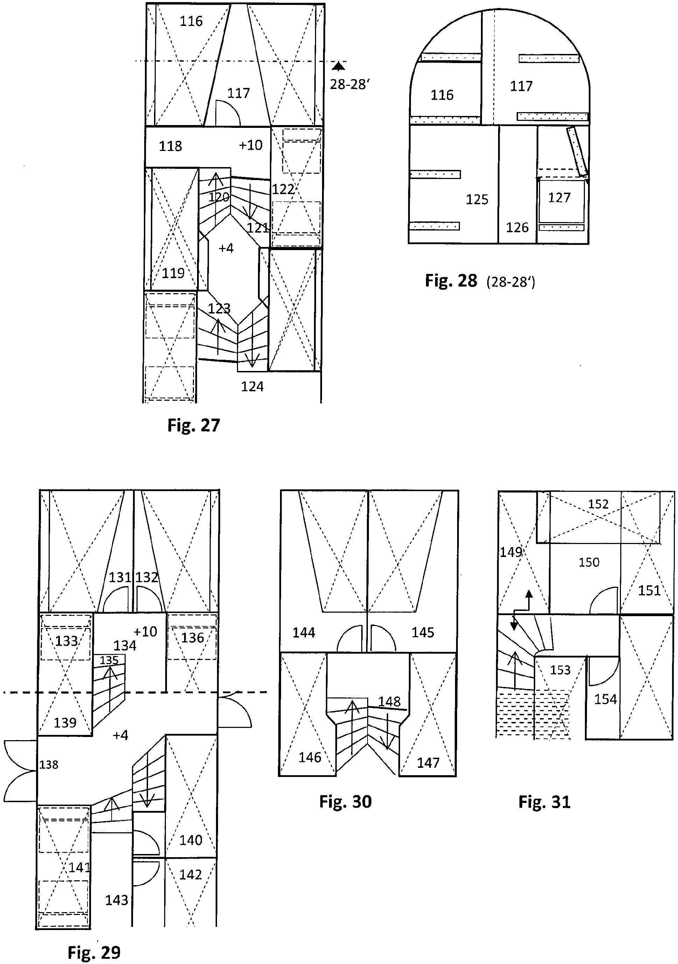

Es geben sich jedoch zusätzliche Gestaltungsmöglichkeiten, von denen einige Beispiele skizziert wurden. Statt in vier Streifen für Betten und Bereiche mit Stehhöhe (Abteilflure) kann die Waggonbreite auch in drei Streifen aufgeteilt werden (Fig. 27, 28), um mehr Platz besonders für obere Betten 53, 54, 56 bzw. 160, 161 zu erhalten. Vorrangig in der oberen Etage können die Betten auch schräg gestellt **99** oder trapezförmig **116, 117** gebaut werden, um mehr in die höhere Wagenmitte zu reichen, bzw. im Fußbereich (von **117)** mehr Platz für den Abteilflur zu lassen. Eine Längsausrichtung aller Betten in dem von einer Stiege erschlossenen Bereich bzw. die Innenlage der Stiege ist auch bei vier Bettpositionen nicht zwingend. Ebenso ist es möglich, in der so erschlossenen Etage noch einen kurzen Korridorabschnitt auszubilden, an dem beispielsweise bei ca. zwei Meter Länge zwei weitere Abteile geschaffen werden können. Nutzen zwei Abteile benachbarter "Inseln" einen gemeinsamen Sanitärraum, so entsteht auch ohne gesonderten Korridor ein Durchgang auf einer Etage, der u.a. vom Reinigungspersonal genutzt werden kann, nicht aber von Reisenden andere Abteile. In der unteren Etage ist ein innenliegender Korridor vorteilhaft, denn bei einem außen verlaufenden Korridor und daneben ansteigender Stiege bliebe eine schlechter erreichbare Restfläche, die aber von zwei etwas geräumigeren Abteilen bzw. deren Sanitärräumen nutzbar gemacht werden kann.

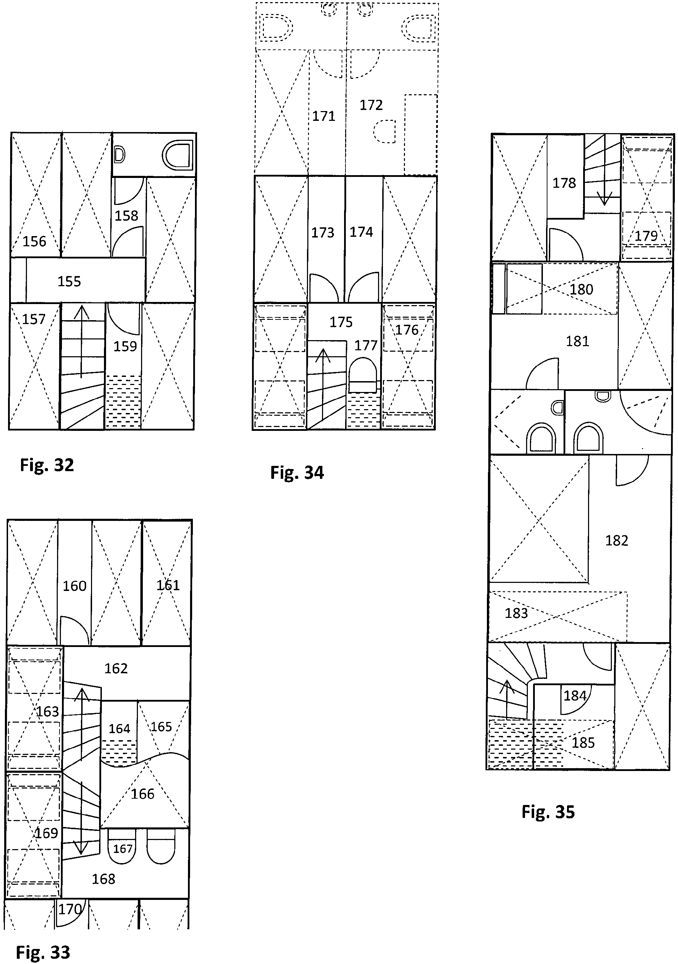

Ein ähnliches Gestaltungsprinzip ist auch mit drei (Fig. 41, 43) oder fünf (Fig. 32, 33, 36, 39) Grundriß-Positionen für Betten je Insel bzw. mit stärker gewendeltem oder winkelförmigem Treppengrundriss umsetzbar.

Eine Insel in der oberen Etage könnte wegen der Abrundung des Daches vorzugsweise für Abteile der gehoben Kategorie mit ausschließlich "unteren" Betten genutzt werden.

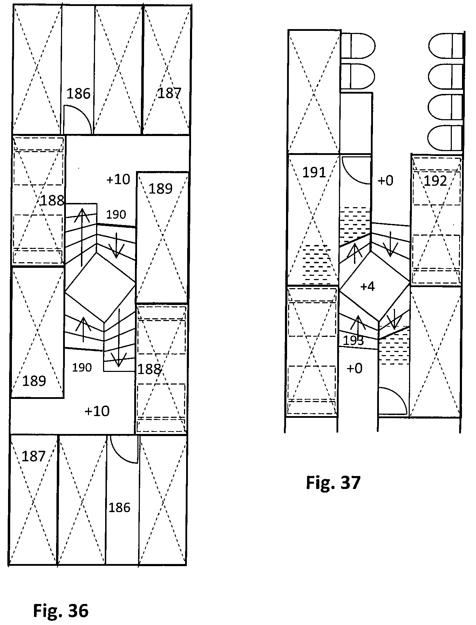

Vor allem in der unteren Etage kann der Platzgewinn durch den nicht benötigten Korridor auch für ein zusätzliches Bett genutzt werden, das insbesondere in gedachter Verlängerung der Stiege eingefügt werden kann. Damit ergeben sich drei nebeneinander liegende Bettpositionen in Längsorientierung (Anspruch 8). Die Breite des Waggons teilt sich vorzugsweise in ein 4-Bett-Abteil **160** mit Betten beidseitig des Abteiflurs und daneben zwei gestapelte Kabinen **161** auf. Damit sind also in einer Etage 6 Betten auf rund 2 Meter Zuglänge in Räumen mit Außenfenstern unterzubringen (in Fig. 33, 36 allerdings um den Preis eines zusätzlichen Querflurs daneben). Wollte man drei getrennte Raumeinheiten nebeneinander anordnen, wäre die mittlere an sich innenliegend, könnte aber ggf. ein Deckenfenster erhalten.

Weil bei einer Insel in der nicht durchgehenden Etage nur kurze Strecken zurückgelegt werden, kann dies auch für eine geringere Geschoßhöhe in dieser Etage und mehr Platz in der anderen genutzt werden, etwa für eine 10 bis 20 cm niedrigere Geschoßhöhe in der unteren Etage, um in der oberen Etage mehr Platz für Betten unter der Dachausrundung zu erhalten und gleichzeitig die Höhendifferenz zwischen den Etagenfußböden zu vermindern. Bei einer Insel in der oberen Etage und einem angehobenen Korridorabschnitt kann man darüber Betten bzw. je ein Bett 51, 97a anordnen, so dass der Raum unterhalb der Betten für die benötigte Kopffreiheit des Korridors zur Verfügung steht. Eine solche Kopplung der Lage von unterem Korridor und oberen Betten sowie von unteren Abteilfluren und oberen Betten wäre auch an weiteren Stellen möglich, um zusätzliche Kopffreiheit im Korridor zu gewährleisten. Sie ist allerdings analog zur US2000548 an den Stellen nicht praktikabel, wo der Weg vom oberen Ende einer Stiege zu Abteilfluren auf der anderen Seite des unteren Korridors verläuft. Nachdem sich der Hochpunkt des Korridors am entgegengesetzten Bettende des Zugangs zu den erschlossenen Abteilen in der oberen Etage befindet, wäre aber auch ein angehobener Korridor unterhalb eines Abteilflurs machbar, dessen Boden dann eben zum dem Abteileingang entgegengesetzten Ende hin ansteigt bzw. dort ein Podest ausbildet. Ein Einstiegsbereich des Waggons, bei dem ohnehin eine Anhebung des unteren Fußbodens zur besseren Anpassung an das Bahnsteigniveau erfolgt, kann ebenfalls vorteilhaft als Fußpunkt einer solchen Stiege genutzt werden, wie es für den Anstieg zu normalen, also längeren Obergeschoßbereichen bereits bekannt ist.

Auch beim Beginn der Stiegen zu derartigen Inseln wird vorzugsweise die Höhe des Korridors variieren. Insbesondere kann dieser in der unteren Etage im Bereich des unteren Antritts der Stiege etwas angehoben werden, um die von der Stiege zu überwindende Höhe zu vermindern, und damit deren Steilheit bzw. ihre notwendige Länge. Die Anhebung des unteren Korridors kann mittels gegenläufiger Rampen überwunden werden und dann bis ca. 40 cm betragen, bei Stufen auch etwas größer sein.

Von einem derartigen Hochpunkt des Korridors aus können zwei Stiegen in entgegengesetzte Zuglängsrichtungen abgehen. Dann reicht es aus, wenn der durchlaufende Korridor im Laufe von vier Abteillängen nur einmal angehoben wird - also nur halb so viele An- und Abstiege aufweist wie nach Anspruch 4. Am Ende der beiden Stiegen wird dann jeweils ein kleiner Flur erreicht. Somit wird im OG ein Bereich von vier Bettlängen, zuzüglich Flur- und WC-Bereichen, von einer einzigen Anhebung des Korridors aus erreicht.

Im Längsschnitt bilden dann vier Treppen eine X-Form. Dieser Umstand kann auch dazu genutzt werden, im mittleren Teil einer ohnehin erforderlichen Treppe zwischen den Etagen zwei zusätzliche Stiegen in entgegensetzte Richtungen nach oben bzw. unten abgehen zu lassen, so dass die beiden von den Stiegen erreichten Inseln in den unterschiedlichen Etagen entstehen. Nachdem, wie vorstehend dargelegt, die Kombination aus Steigen und Inseln keine zusätzliche Verkehrsfläche erfordert, kann auf diese Weise die Treppe zwischen Unter-und Obergeschoß praktisch ohne Flächenverlust gebaut werden.

An dem Kreuzungspunkt von Stiegen und dem Verlauf des Korridors können vorteilhaft auch Außentüren gebaut werden, insbesondere für Bahnsteighöhen von 75 cm, so dass sich Reisende von Einstiegsbereich aus in vier Richtungen verteilen können.

Bei einem Tiefpunkt bzw. einem Hochpunkt kann der Korridorverlauf die Seite wechseln (Anspruch 7), das erleichtert unten die Anordnung umbaufähiger Abteile und ermöglicht die mehrfache Verwendung gleicher Formteile in um 180° verdrehter Anordnung beidseitig der entsprechenden Symmetrieachse.

### Langsam maändierender Korridor bei unterschiedlich breiten Abteilen mit trapezförmigem Grundriss

Aus der DE737981 ist die Anordnung des schmaleren Endes eines Abteils gegenüber dem breiteren Ende eines gleichartigen Abteils auf der anderen Korridorseite bekannt. Der Gang maändriert dann auf der Länge je eines Abteils hin bzw. her und die Abteilflure sind dort sehr eng. Ordnet man jedoch gemäß Anspruch 10 zwei unterschiedliche, jeweils trapezförmige Abteil- bzw. Kabinentypen so an, dass wie in Fig. 47 die breitere Schmalseite des schmaleren, vorzugsweise kabinenförmigen Abteils an die schmalere Schmalseite des breiteren Abteils angrenzt, und entsprechende Kabinen um 180° gedreht auf der anderen Seite des Korridors, so maändriert der Korridor lediglich auf der Länge von zwei Abteilängen. Das breitere Abteil verfügt dann auch über mehr Platz als bei gedrehter Kombination von je zwei gleich großen Abteilen. Das jeweils breitere Abteil kann dann breitere (Doppel-) Betten (237) oder einen Abteilflur (235) aufweisen. Fügt man abweichend von Fig. 47 beidseitig des Korridors einen dritten trapezförmigen Abteiltyp ein, dessen mittlere Breite wie in der DE737981 die Hälfte des nach Abzug des Korridors verfügbaren Platzes beträgt, kann die Verschwenkung des Korridors auf drei Abteillängen gestreckt werden, also auf ca. 6 Meter. Beispielsweise könnten die Stirnseiten dreier aufeinanderfolgender Abteile eine Breite von 60 cm, 80 cm, 140 cm und 160 cm aufweisen; bei 60 cm Gangbreite ergäbe das einen Platzbedarf von 280 cm zuzüglich der Wandstärken.

### Effektiver Zustieg

Bei zweistöckigen Eisenbahnwaggons befindet sich meistens eine Treppe zur oberen Etage in der Nähe einer Eingangstüre und häufig in Nähe des Waggonendes. Im Fernverkehr und besonders bei Schlafwagenzügen gibt es wenig Ein- und Ausstiege bezogen auf die Fahrtstrecke, so dass möglichst nur eine Eingangstür bzw. ein Eingangsbereich je Längsseite eines Waggons eingeplant wird. Die Folgen eines Rückstaus an der Treppe können in einer Zusammenstellung von zweistöckigen Eisenbahnwaggons nach Anspruch 11 begrenzt werden, wenn der kürzeste Weg zu Schlafplätzen in der oberen Etage über eine Eingangstüre in dem Nachbarwaggon führt: In diesem Fall müssen die Reisenden den Übergang zum Nachbarwaggon queren, an den keine Abteile angrenzen und der auch deshalb einen Pufferbereich bilden kann. Insbesondere ist es möglich, dass sie auf diesem Weg auf einem Übergang in der unteren Etage in den Nachbarwaggon wechseln und erst dort eine Treppe in die obere Etage nehmen. Um eine vorteilhaften Zugang zu erreichen, wären die Abteilbezeichnungen entsprechend den günstigsten Zugängen zuzuordnen, statt den Wagennummern.

Zusätzlich können die Reisenden mit geräumigeren Abteilen mit Abteilfluren zuerst zum Betreten des eingefahrenen Zuges aufgefordert werden, dann erst diejenigen mit Schlafplätzen in Kabinenbauweise, die sich länger im Korridor aufhalten.

### Umbau vom 2er-Sitzabteil zu gestapelten Kabinen

Deutsche D-Zug-Abteile des 20. Jahrhunderts hatten oft verstellbare Sitze, die zu einer fast durchgehenden Liegefläche verbunden werden konnten. Damit konnten in einem Sechser-Sitzabteil drei bis vier Personen halbwegs komfortabel liegen. Die aus zwei Sitzen gebildete Liegefläche bestand aus vier Abschnitten mit drei Ritzen und war entsprechend unbequem; gleichzeitig war die Höhe der Rückenlehnen durch den im Liegen verfügbaren Platz von insgesamt knapp 2 Meter begrenzt, betrug jedenfalls kaum über 50 cm. Diesen Nachteil vermeidet ein Sitzpaar gemäß Anspruch 12, bei dem die Sitze ebenfalls in Sitzposition gegenüberstehend montiert sind und jeweils wenigstens eine Rückenlehne und eine Sitzfläche aufweisen, bei dem aus nur drei Teilen der beiden Sitze eine Liegefläche gebildet werden kann, nämlich aus beiden Sitzflächen und lediglich einer Rückenlehne. Diese Rückenlehne kann dann normale Abmessungen von mindestens 60 cm Länge (im Sitzen Höhe) aufweisen. Um sie in eine liegende Position zu bringen, muss die zugehörige Sitzfläche entsprechend weiter nach vorne verschoben werden als bei der bekannten Bauweise. Dies wird wesentlich erleichtert, wenn es sich um ein Zweier-Abteil und somit ein einzelnes Sitzpaar handelt, womit die vorgeschobene Sitzfläche an der seitlichen Außenwand abgestützt werden kann, so dass sie zusammen mit zwei gelenkigen Verbindungen zur flach gelegten Rückenlehne an drei Ecken gehalten wird. Eine zu lange Rückenlehne ist wiederum zu vermeiden, damit liegende Reisende möglichst mit dem Hohlkreuz den Stoß zwischen ursprünglicher Rückenlehne und Sitzfläche überbrücken können, und nicht mit dem Gesäß in einer Ritze liegen. Je nach Längenverhältnissen kann die gegenüberliegende Sitzfläche ebenfalls etwas weggeschoben werden oder feststehen und unterhalb ihrer zugehörigen Rückenlehne um einen Bereich verlängert sein, der im Sitzen nicht benötigt wird. Die zugehörige Rückenlehne des anderen Sitzes wird vorzugsweise nach oben weggeschoben oder weggeklappt.

In bevorzugter Ausführung befindet sich über einem derartigen Sitzpaar eine obere Liegefläche nebst Unterlage, die schwenkbar bzw. absenkbar ist und gemäß Anspruch 13 mit der Schwenkung bzw. Absenkung in Liegeposition zusammen mit den seitlichen Abgrenzungen des Abteils sowie einer evtl. Konsole oder Abdichtung (23) einen räumlichen Abschluß zum unteren Abteils bzw. Teil des Abteils herstellt. In dieser Liegeposition der oberen Liegefläche ist es wünschenswert, dass die beiden Kabinen bzw. kabinenförmigen Teile des ursprünglichen 2er-Sltzabteils getrennt zugänglich sind, auch wenn die andere Kabine verschlossen bleibt, sie mithin getrennt zu öffnende Türbereiche aufweisen. In Sitzposition ist es hingegen praktischer, wenn sich beide Türbereiche gemeinsam öffnen lassen, bzw. wenn sie dauernd geöffnet sind. Die Verriegelung beider Türbereiche miteinander wird vorzugsweise durch das Umklappen des oberen Bettes in Liegeposition automatisch aufgelöst. Das Bett kann in abgeklappter Position als Schiene für die Türen dienen.

### Bett vor dem Ausgang

In einem Abteil kann ohne weiteres ein Klappbett in Liegeposition quer vor die Zugangstür positioniert werden (Anspruch 9), wenn das Bett zur Abteilseite hin bequem verlassen werden kann und es wegen einem zugehörigem, privaten WC wenig Veranlassung gibt, das Abteil nachts zu verlassen. Das gilt besonders, wenn dieser Bettplatz in der entsprechenden Abteilkategorie bei der Mehrzahl der Buchungen gar nicht genutzt wird, so dass es sich um eine lediglich als Zusatzbett zu verstehende Liegeposition in der Form einer absenkbaren oder schwenkbaren Liegefläche bzw. eines aufklappbaren Sessels handelt, bzw. wenn bei zwei Reisenden im Abteil auf Stockbetten verzichtet werden soll.

In der Nacht ist lediglich die Erreichbarkeit des Sanitärraums wesentlich; möchte ein Reisender das Abteil zum Korridor hin verlassen, wird das Klappbett meist nicht mehr benötigt. Daher kann ein derartiges Bett auch vor der Tür angeordnet werden, wobei die Abteiltür als Fluchtweg nach außen zu öffnen und das Bett in Notfällen leicht zu überqueren sein sollte, weswegen Stockbetten vor der Tür nicht ratsam wären.

### Überblick der Abbildungen

Figura 1 zeigt einen Zugabschnitt mit mehreren erfindungsgemäßen Ausprägungen im Grundriss. Fig. 2, 3 und 4 sind Querschnitte dazu.
Fig. 5 zeigt eine Variante des Flurbereichs mit nicht-rechtwinkligen Schlafplätzen zur Verbesserung der Platzverhältnisse.
Fig. 6 und 7 zeigen vergrößerte Längsschnitte eines in zwei Kabinen teilbaren 2er Abteils.
Fig. 8 verdeutlicht Nachteile einer Queranordnung, Fig. 9 zeigt L-förmige Grundrißdetails.

Die Fig. 10 bis 19 zeigen im Grundsatz zweistöckige Waggonbereiche mit lediglich einem Korridor, der über je zwei Abteillängen in einem Niveaubereich zwischen den beiden Etagen auf und ab verläuft und damit Bettplätze vorzugsweise in vier Ebenen erschließt, als Beispiel gemäß Ansprüchen 7 und 8. Grundrißbeispiele zeigen die Fig. 10 bis 13 mit einem außenliegenden Korridor, die Fig. 14 bis 16 mit einem innenliegenden Korridor und die Fig. 17 bis 19 mit einem Seitenwechsel des innenliegenden Korridors. Fig. 20 bis 22 zeigen eine Variation mit einem Seitenwechsel des außermittigen Korridors.

Die Fig. 23 bis 29 zeigen im Wesentlichen zweistöckige Waggonbereiche mit einem im Wesentlichen in der unteren Etage verlaufenden Korridor, der im Grundsatz nach je vier Abteillängen einen moderaten Zwischenanstieg aufweist, von dessen Hochpunkt dann zwei weitere Treppen in entgegengesetzte Richtung fortführen. Die übrigen Fig. 30 bis 44 zeigen dann weitere Grundrissbeispiele nur der hier als Inseln bezeichneten Etagen mit einem Aufstieg in Zuglängsrichtung und ohne durchlaufendem Korridor, darunter Varianten mit sehr knapp bzw. sehr großzügig bemessenen Abteilen bzw. Bewegungsräumen. Die Fig. 45 bis 47 zeigen weitere Möglichkeiten der gemischten Anordnung von Abteilen bzw. Kabinen in einer Etage.

Flg. 48 zeigt eine 1 ½-stöckige Anordnung.

Fig. 49 zeigt isolierte Abteile gemäß Anspruch 15.

Fig. 50 bis 52 zeigen verschiedene Abfolgen von unterschiedlich zusammengestellten Abteils-Abschnitten entlang eines Waggons.

### Einzelne Abbildungen

Fig. 1 zeigt im Grundriss mehrere erfindungsgemäße Ausprägungen in einem einstöckigen Waggonabschnitt von ca. 16 Meter mit der Lage der Querschnitte 2-2', 3-3'und 4-4'.

An drei im Eingangsbereich **10** vorhandenen Ecken sind gestapelte Kabinen **1.** Diese Anordnung ergibt sich daraus, dass hier an zwei Seiten Gangflächen zu Verfügung stehen, der Bereich des längs durch den Waggons verlaufenden Korridors **4** und der Bewegungsraum zu den Türen quer dazu, so dass sich die Kabinen-Reisenden nach dem Aussteigen weniger drängen und die beiden jeweils gestapelten Kabinen **2, 3** ihre Einstiege an zwei unterschiedlichen Seiten bekommen können. Vorzugsweise steigt man in die jeweils untere Kabine **2** von ihrer Schmalseite auf der Seite des Eingangsbereichs, wo während der Fahrt sonst niemand vorbei kommt, die jeweils obere Kabine **3** besteigt man an ihrer Längsseite von dem Korridor **4** aus. Die beiden gestapelten Zwei-Personen-Kabinen **11** sind in Nähe des Übergangs zum nächsten Waggon am Fußende verschmälert. Der vierte Quadrant des Eingangsbereichs wird hier von einer kleinen Sitzreihe **12** eingenommen, für ihre Beinfreiheit wird dieser Bereich des Korridors **4** mit genutzt.

Es folgt ein Korridorabschnitt mit beidseitigen Abteilen: Der Abteiltyp **5** auf der breiteren, hier links neben dem Korridor **4** dargestellten Seite weist Stockbetten **6** und jeweils einen kleinen Eingangsbereich bzw. Abteilflur **7** mit Stehhöhe auf, der auch zum Umkleiden im Stehen nutzbar ist sowie Beinfreiheit im Sitzen vermittelt. Der Sanitärraum **13** ist von zweien dieser Abteile erreichbar, Sanitärräum **14** gehört zu einem Abteil, die Sanitärräume **15** und **16** sind vom Flur aus für alle Reisenden zugänglich. Nachdem die Abteilflure **7** jeweils nur die halbe Länge des Abteils umfassen, bleibt daneben noch Platz. Bei den beiden Abteilen in der Mitte der Abbildung (Querschnitt 3-3' in Fig. 3) wird er von den innenliegenden Betten **17** am Korridor eingenommen. Reicht der Platz für eine Wand zwischen den Betten **17** und dem Korridor oder für die bei einer geschlossenen Kabine benötigten Lüftungsleitungen zu den Betten **17** nicht aus, wären hier auch zum Korridor offene Kajütliegen möglich, ebenso ein zur Liegefläche umbaufähiges Sitzpaar mit Sitzrichtung in und gegen Fahrtrichtung.

Im oberen Teil der Abbildung nimmt die Sitzreihe **18** die Lücke zwischen den Abteilfluren von zwei L-förmigen Abteilen des Typs **5** ein. Wenn dort auf der anderen Seite eine ebenfalls zum Korridor ausgerichtete Sitzreihe **19** sowie Fenster angeordnet wurden, tritt hier nach Sonnenaufgang Tageslicht in den Korridor, von der Sitzreihe **18** kann nach außen geschaut werden, und hier kann ein Treffpunkt der Reisenden entstehen. Nachdem das Durchkommen durch den Zug ggf. erschwert wird, wenn hier quer zum Zug in einem Bereich mit knapp 2 Meter Breite gesessen wird und die Beine der Sitzenden in diesen Korridor ragen, wird eine derartige Sitzgruppe vorzugsweise etwa in der Mitte zwischen zwei Eingangstüren angeordnet.

Auf der schmaleren Seite (rechts) neben dem Korridor 4 sind weiterhin vier Abteile **8,** in denen sich je zwei Personen gegenüber sitzen können und die in Liegeposition in zwei gestapelte Kabinen unterteilt werden, wie in Fig. 3., Fig. 6 und Fig. 7 ersichtlich. Im Grundriss der Fig. 1 sind die Sitzposition und die Diagonale der Liegeflächen gestrichelt dargestellt. Erst für den Umbau in Schlafposition müssen diese Abteile dann verlassen werden und jedes Abteil wird in zwei Kabinen geringer Höhe unterteilt, in die jeweils vom Flur eingestiegen wird. Falls der Zug spät abfährt und der Zug bereits mit Abteilen in Schlafposition bereitgestellt wird, halten sich diese Reisenden eine gewisse Zeitlang im Korridor **4** auf, bis sie ihr Gepäck und sich selbst in die relativ beengten Kabinen bewegt haben. Demgegenüber kann der Teil der Reisenden mit Abteilen **5** auf der anderen Seite dieses Korridorabschnitts mit Hilfe des Abteilflure **7** schneller in ihren Abteilen verschwinden. Danach wird der Korridor hier mit seinen gut acht Metern Länge hauptsächlich von den zehn Reisenden der Abteile **8** und Betten **17** zum Einstieg in die Betten benötigt, davon müssen lediglich fünf zu den oberen Kabinen klettern und benötigen damit etwas länger. Auch während der weiteren Fahrt übernimmt die Korridore **4** die zusätzliche Funktion des Ein- und Aussteigen in die Kabinen bzw. Kajüten; während der Nacht sind die Korridore in Nachtzügen erfahrungsgemäß wenig frequentiert.

Türen bzw. Einstiegsöffnungen sind mit gezackten Pfeilen dargestellt, Drehtüren kommen vor allem bei den Abteilen und Sanitärräumen links des Korridors in Betracht. Die Räume sind nur darstellungshalber mit jeweils eigenen Linien umgrenzt. Alle außenliegenden Räume können Fenster erhalten.

In den ca. 14 Metern Zuglänge bis zur Linie 2-2' (Querschnitt in Fig. 2) können somit 34 Reisende transportiert werden, davon 26 in Betten. Die Bettplätze könnten auch von bis zu 19 Alleinreisenden als Einzelabteile bzw. Einzelkabinen genutzt werden. Bei dreistöckiger Ausführung von Stockbetten und Kabinen fänden 47 Personen Platz; allerdings können in den Kabinen des Typs **5** nur zwei Personen mit etwa einem halben Meter Sitzbreite (ähnlich wie in Flugzeugen) auf der unteren Liege nebeneinander mit Beinen zum jeweiligen Abteilflur **7** sitzen.

Wie in den Querschnitten in Fig. 2 bis 4 gut ersichtlich ist, wird der Grundriss des Wagenkastens ausschließlich durch vertikale Umgrenzungen in Korridor **4** und Abteile bzw. Kabinen und Sitzbereiche gegliedert. Fig. 2 zeigt zusätzlich eine optionale Zusatzliege **21** über der Sitzreihe **18,** wie sie bei genügender Höhe an Stelle von Gepäckablagen jeweils oberhalb von Sitzplatzgruppen einbaubar wäre, in hochgeklappter Position. In Fig. 3 (Querschnitt 3-3') ist die obere Liegefläche **22** der Abteile **8** oberhalb des Fensters hochgeklappt dargestellt, zusätzlich gestrichelt in abgesenkter Lage. In abgesenkter Lage soll ihre Form einen vollständigen Raumabschluss auch im Türbereich herstellen, Konsolen **23** tragen die Liegefläche und mindern zusammen mit Gummilippen die Schallübertragung zwischen oberer und unterer Teilkabine. In Fig. 4 (Querschnitt 4-4') sind die beiden Kabinen **2** und **3** bereits mit Matratzen und Bettdecken versehen, Gepäck **24** befindet sich in einem Stauraum unter den Kabinen, unter der Sitzreihe und in einer Gepäckablage über der Sitzreihe **12.,** eine Person steht im Korridorbereich **4.**

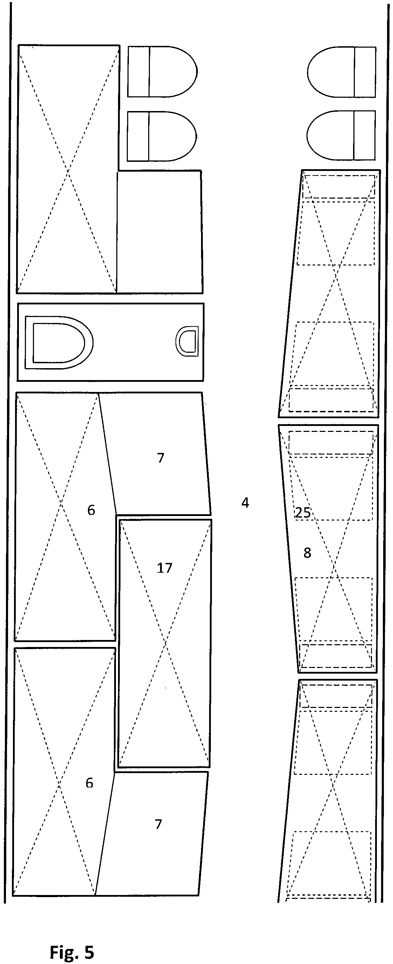

Fig. 5 zeigt vergrößert eine Variante eines Abschnitts aus Fig. 1 mit nicht-rechtwinkligen Schlafplätzen, womit im Oberkörperbereich der Kabinen **6** und **8** mehr Platz als am Fußende gewährleistet wird und dies genutzt wird, um die Kajüten bzw. Kabinen **17** und die Abteilflure **7** etwas zu verbreitern. wurden. Der Spalt zwischen der verschiebbaren Sitzfläche **25** und der Wand zum Korridor **4** in den Kabinen **8** berücksichtigt den geringeren Platz beim Vorschieben zur Herstellung einer Liegefläche.

Fig. 6 zeigt einen Längsschnitt des Abteiltyps **8** mit hochgeklappter Liegefläche **22** an der Linie 6-6' in Fig. 3. Unterhalb der Liegefläche **22** ist der Verlauf der Konsole **23** an der Außenwand zu sehen. Die Sitzflächen **25, 26** und Rückenlehnen **27, 28** sind ebenfalls in Sitzposition. Unterhalb des Fensters **29** enthält die Außenwand in Sitzhöhe eine Schiene **30,** an der sich eine Ecke der Sitzfläche **25** mit Stiften bzw. Bolzen **31** zusätzlich abstützen kann. In der in Fig. 7 gezeigten Liegeposition wird der hier rechte Sitz **25** sehr weit nach vorne geschoben, was durch die besonders bei 2-sitzigen Abteilen mögliche Abstützung an der Außenwand sehr erleichtert wird. Seine überlange Rückenlehne **27** stützt dann den Rücken-und Kopfbereich der liegenden Person ab, die ursprüngliche Sitzfläche **25** den Hüft-/ Pobereich. Die beiden Ritzen zwischen Polstern befinden sich unter dem Hohlkreuz und Oberschenkel, also außerhalb der im Liegen hauptsächlich belasteten Körperbereiche und stören weniger als bei symmetrischer, vierteiliger Liegefläche. Die Sitzfläche **26** ist in der Skizze nicht verschiebbar und reicht bis an die gegenüberliegende Wand, ist also länger als in Sitzposition benötigt. Die nun überschüssige Rückenlehne **28** wird nach oben geschoben oder weggeklappt. Die Liegefläche **22** ruht auf der Konsole **23** und teilt das Abteil in zwei abgeschlossene Kabinen.

Fig. 8 zeigt zu Vergleichszwecken einen fruchtlosen Versuch, den Abteilflur bei quer zur Fahrtrichtung angeordneten Abteilen auf die Hälfte der Bettlänge zu verkürzen, und die damit L-förmigen Abteile zu verschachteln: Nur eines der beiden Abteil wäre vom Korridor **4** aus zugänglich. Nur bei Längsorientierung der Betten kann auf diese Weise Platz eingespart werden.

Fig. 9 zeigt links des Korridors eine Anordnung zweier Abteile **36** und **37,** bei denen durch teilweise Überschneidung der Bettlängen etwas Platz gewonnen wird. Das Abteil **36** hat dazu den Abteilflur zwischen Bett und Außenwand, womit in Sitzposition besser aus dem Fenster geschaut werden kann. Damit wird ein zusätzlicher Weg an der Stirnseite des Bettes vorbei erforderlich, in dem hier ein Sitz **38** in aufgeklappter Position dargestellt ist. An einem Klapptisch ist für zwei Personen gedeckt. Auf diese Weise werden also auch unterschiedliche Abteilkategorien gebildet.

Figuren 10 bis 12 zeigen eine Bauweise gemäß Anspruch 4, die in der oberen Etage (Fig. 10) ohne nennswerten Grundrissbedarf für einen Korridor auskommt, mit einem außenliegenden Korridor in der unteren Etage (Fig. 11). Die Ziffern von **+0** bis **+11** symbolisieren einen sukzessiven Anstieg des Fußbodenniveaus von den Abteilfluren **44, 47** nebst Querflur **49** in der unteren Etage (Bodenhöhe **+0**) über einen größeren Teil **40** des Korridors (Höhe **+2)** und einen Hochpunkt **41** des Korridors **(+6)** zu quer dazu angeordneten Stufen **(+7** bis **+10),** die zu vier Abteilen des Typs **50, 51** (entsprechend **53** bis **56** in Fig. 13) in der oberen Etage (Höhe **+11**) führen. Die im Gegensatz zur US2000548 recht bequeme Aufstiegsmöglichkeit ist ersichtlich, lediglich von Stufe **+8** zu einer der Stufen **+10** muss die Richtung gewechselt werden, was aber der Wegrichtung zu den Abteilen **51** entspricht. Die Stufen **+7** und **+8** sind relativ breit gewählt; das ergibt sich als Kompromiss zwischen der Kopffreiheit ober- und unterhalb und vermeidet es, bei eventuellen Fehltritten beim Austritt aus den Abteilen **51** zu tief zu fallen. Die begrenzte Höhe des Hochpunkts des Flures **+6** soll es erlauben, das jeweilige Bett der Einzelabteile **51** über dem Flur anzuordnen und die Betten auch beim Hochpunkt des Flures stirnseitig (bis an die Trennwand zwischen den beiden Abteilen **51**) zusammenzuführen. Gleichzeitig ergeben die mit der Stufenhöhe **+7** bis **+10** bezeichneten Teile des Aufgangs in der unteren Etage (Fig. 11) eine Einschränkung des Luftraum der oberen Betten an den Positionen **45, 48** und im Abteilflur **47,** wie im Querschnitt (Fig. 12) gut sichtbar ist, und bei Bett **48** auf den Fußraum begrenzt ist. Die Abteile **50, 51** im Obergeschoß haben bis auf den Treppenbereich eine rechtwinkligen Grundriss mit Abteilflur entlang der Betten, was dann auch den Zugang zu den privaten Sanitärräumen bzw. den halbprivaten Sanitärräumen **52** ermöglicht. Die Sanitärräume sind an einer Stelle des OG angeordnet, die durch den Korridor nicht mehr erschlossen wird. Infolge der abteilnahen Sanitärräume müssen die etwa schwierig begehbaren Treppen auch nicht nachts-ggf. im Halbschlaf-auf dem Weg zu einem WC benutzt werden. Bei den Beispielen im unteren Teil der Fig. 11 liegt in der unteren Etage unter den Sanitärräumen der kurze Querflur zu den unteren Abteilen **47,** so dass auch gewisser Lärmschutz erreicht wird und die Längsausstreckung in beiden Etagen an den gleichen Stellen für Betten genutzt wird. Die gestapelten Kabinen **46** sind auf die Außenseite gelegt worden, um ein Engegefühl zu vermeiden. Daneben befinden sich die innenliegende Abteile mit Abteilflur **47** und Stockbetten **48.** Diese Abteile enthalten über Fenster zum Korridor und/ oder über eine Glastür zum Quergang Tageslicht und Aussichtsmöglichkeiten. Zwei doppelt hohe, fest installierte Stufen (Höhe **+4**) erleichtern den Zugang zur oberen Kabine **46** und können auch als "Notsitz" genutzt werden. Auf einem Zugabschnitt von knapp 5 Metern Länge unterhalb der Querschnittslinie 12-12' sind somit oben zwei Doppelabteile **50,** zwei Einzelabteile **51** und zwei Sanitärräume, unten zwei Doppelabteile **47-48** und Grundrisspositionen für vier Kabinen **46** ohne Abteilflur untergebracht, insgesamt also Betten für bis zu 14 Fahrgäste. Alternativ könnte der Bereich **46, 47, 48** auch als 4er Abteil gebaut werden und der Querflur **49** zu einer Außentür führen.

Oberhalb der gestrichelten Linie ist in Fig. 11 eine Variante mit quer angeordneten Betten in der unteren Etage gezeigt. Die Bettposition **45** ist über einen Abteilflur **44** erreichbar und die Kopffreiheit ist hier recht eingeschränkt, so dass an der Bettposition **45** vorzugsweise nur ein Bett Platz findet. Die Betten **43** könnten vom selben Abteilflur **44** erschlossen werden, was dann ein Dreierabteil ergäbe, oder als Kabinen ausgeführt werden, womit sich drei getrennte Schlafbereiche ergäben. An die Bettposition **42** können ebenfalls quer angeordnete Kabinen kommen. Die Queranordnung ermöglicht in der unteren Etage eine flexible Anpassung an unterschiedliche Längenvorgaben ohne Platzverlust durch einen Querflur wie bei **49.**

Fig. 13 zeigt eine Variante der oberen Etage mit zwei Grundrisspositionen für gestapelte Kabinen **53** und zwei 3-Bett-Zimmern mit Doppelstockbetten **54** und Einzelbett **56** an dem jeweiligen Abteilflur **55.** Bei Position **56** ist über dem aus der unteren Etage teilweise erhöhten, seitlichen Korridor kein (unteres) Stockbett möglich, es bleibt aber Stauraum unter dem Einzelbett. Somit sind in der oberen Etage auf knapp 5 Meter Länge 10 Betten untergebracht; bei vier weiteren doppelstöckigen Bettpositionen in der unteren Etage werden zusammen 18 Betten auf ca. 5 Meter erreicht. Die auf der links gezeichneten Seite für den Zugang zu den Kabinen 53 und die Stufen benötigte Länge wird auf der rechten Seite für einen Sanitärraum genutzt, der bei gespiegelter Wiederholung dieser Anordnung ggf. von zwei benachbarten 3-Bett-Kabinen zugänglich sein kann.

Fig. 14 bis Fig. 16 zeigen einen zweistöckigen Waggonaufbau gemäß Anspruch 5 mit innenliegendem Korridor **57,** der zwischen den Höhenlagen von drei Stufen **(+3)** und acht Stufen **(+8)** über dem untersten Niveau variiert. Er ist somit im Grundriss der oberen Etage (Fig. 14, links) und der unteren Etage (Fig. 15, Mitte) gleichermaßen dargestellt. Beide Etagen haben auf der links dargestellten Seite Abteile (obere Etage **58,** untere Etage **59)** mit Doppelstockbetten und innenseitigen Abteilfluren (oben bezeichnet mit **+11** für die Zahl der Stufen über dem untersten Niveau), die von den Hochpunkten **(+8)** bzw. Tiefpunkten **(+3)** des Korridors über weitere Stufen (nach oben **+9, +10** bzw. nach unten **+1,+2**) zugänglich sind. Der Stehraum im Abteilflur der Abteile ist jeweils um den Bereich der quer zum Korridor verlaufenden Zugangstreppen eingeengt: In der oberen Etage ist der Boden im Bereich oberhalb der nach unten führenden Stufen (Niveau **+1** und **+2)** angehoben (horizontal gestrichelt). Daher sind die Sanitärräume **60** in dem von Korridor aus nicht erreichbaren Bereich der oberen Etage auch nur von je einem der angrenzenden Abteile nutzbar.

In der unteren Etage ist die Kopffreiheit im Bereich unterhalb der nach oben führenden Stufen **(+9** und **+10)** eingeschränkt (ebenfalls gestrichelt). Entsprechend sind die Sanitärräume **61** in der unteren Etage nur von je einem Abteil zugänglich. Die Sanitärräume machen auch einen gewissen Versatz der Abteile in Längsrichtung gegenüber den Zugangstreppen der anderen Etage erforderlich.

In Richtung der anderen Waggonseite folgt der schlitzförmige Korridor, der beide Etagen längs durchschneidet. Auf der rechten Seite des Waggons sind unten Abteile **62** mit Sitzmöglichkeit, zu deren Bodenniveau **(+0)** vom Korridor zwei Stufen innerhalb des Abteils nach unten führen und die durch ein schwenkbares Bett **63** (mit angedeuteter Auflage in Fig. 16) in zwei abgeschlossene Kabinen teilbar sind. Darüber sind etwas längs versetzt je zwei weitere Kabinen **64** und **65,** von denen die obere über drei Stufen doppelter Höhe zum Niveau **+14** von ihrer Schmalseite her zugänglich ist. Der Raum unter diesen Stufen wäre auch als Gepäckfach nutzbar, ggf. gleichzeitig mit der Kabinentür verschließbar. Auf der rechten Seite wird die entsprechende Lücke unten auf der schmaleren Seite (rechts) neben dem Gang durch zwei Sitzplätze ausgefüllt. Die Stufen im Korridor sind unterseitig angeschrägt, wie es sonst bei gewinkeltem Treppenverlauf üblich ist, um den Zugang zur Mitte der Abteile **62** zu erleichtern; in den Abteilen sind zwei zusätzliche Stufen. Insgesamt ergibt dies auf der Länge von knapp fünf Metern vier Doppelabteile **58, 59** mit Abteilflur, zwei umbaufähige Doppelabteile **62** und vier Einzelabteile, zusammen mit den Sitzen also 18 Plätze, dazu zwei Sanitärräume **60, 61.** Im Vergleich zur Bauweise der Fig. 10 bis 12 ermöglicht die Innenlage des Korridors, dessen größere Höhenbewegung und die geringe Zahl von Abteilfluren zwei zusätzliche Betten, wobei sich der Korridor nun in seiner gesamten Breite über beide Etagen erstreckt.

Punktiert dargestellt ist noch eine Variante, in der oberen Etage an Stelle eines Sanitärraums **60** ein Bett **66** quer über dem Korridor anzuordnen. Auch die Betten **64** könnten sich alternativ an ihrem zugangsfernen Ende in den Luftraum über dem Korridor verbreitern. In dem Leerraum unterhalb des Korridors **57** können Leitungen verlegt und/oder technische Anlagen angeordnet werden (vgl. Fig. 16).

In einer engeren Ausführungsweise (ohne Darstellung) würden die eingeschobenen Sanitärräume und Sitzplätze sowie die Querstufen zum Niveau **+14** entfallen und die Betten in der oberen und der unteren Etage würden bis auf die Trennwände lückenlos aufeinander folgend entlang der Außenwände angeordnet. Auf der rechten Schmalseite seitlich des Korridors wäre dann aus Sicherheitsgründen vorzugsweise (nur) drei vom Korridor aus erreichbare, gestapelte Betten denkbar, um die Notwendigkeit zu hohen Kletterns zu der **64** entsprechenden Kabine zu vermeiden, wobei jeweils die unteren beiden zu einem umbaufähigen Sitzabteil wie **62** koppelbar wären. Dies ergäbe 14 Betten auf ca. vier Meter Zuglänge. Die Liegefläche in der Position **64** könnte auch von dem Abteil **58** aus zu erreichen sein, über den tiefen Abschnitt des Korridors.

Im Fall von vier Bettebenen auf der schmaleren Seite könnten die obersten Betten **64** an ihrer Zustiegs-fernen Seite in Richtung des Flurs verbreitert werden und somit der Krümmung des Daches ausweichen. Da der Korridor hier weiter unten verläuft, würde das die genutzte Kopffreiheit nicht einschränken.

Die Ausführungsvarianten mit teilbaren Kabinen mit Sitzmöglichkeit können auch mit offenen, durch einen Vorhang vom Korridor abgeteilten "Kajütliegeplätzen" gebaut werden. Ebenfalls vorteilhaft wäre eine Mischung von Kajütliegeplätzen und von geschlossenen Kabinen auf der schmalen Seite neben dem Gang, gegenüber der Abteile mit Abteilflur auf der anderen Gangseite. Kajütliegeplätze können insbesondere Reisende mit Platzangst bevorzugen, bei einer geringeren Zahl von Kajütliegeplätze wäre die gegenseitige Geräuschbelästigung v.a. durch Schnarcher jedoch deutlich reduziert und es gäbe insbesondere keine direkte Schallausbreitung zwischen zwei Kajütliegeplätzen über den Korridor hinweg. Die anderen Reisenden hätten Lärmschutz durch abgeschlossene Kabinen.

Fig. 17 zeigt eine weitere Bauweise mit auf- und ab variierendem Korridor, der nun jedoch überwiegend in der oberen Etage (nicht dargestellt) verläuft. Zwei gegenüberstehende Treppenabsätze in Richtung untere Etage führen zu einem kurzen Tiefpunkt des Korridors, hier durch die Höhenlage **+3** markiert. Der Raum zwischen der Treppe und der näheren Außenwand (auf linken, schmaleren Seite) teilt sich jeweils vertikal in eine von der Treppe aus zugängliche (großer Doppelpfeil) obere Kabine **107** und ein aus dem Abteilbereich **104** zugängliches unteres Bett **105** darunter (Pfeile markieren den Zugang zum Bett, die schräge Linie teilt die Darstellung von oberem und unterem Bettplatz). Im Raum zwischen der Treppe und der entfernteren Außenwand wird außer weiteren Stufen jeweils ein Abteil **104** mit Abteilflur und zwei Stockbetten **106** angeordnet. Zusammen mit dem bereits genannten Bett **105** auf der anderen Seite handelt es sich bei **104** also um 3-Bett-Abteile. Wird das obere Stockbett **106** weggeklappt, kann daraus jeweils ein Abteil mit zwei unteren Betten abgeleitet werden, von denen das untere Stockbett **106** dann die Möglichkeit zum aufrechten Sitzen aufweist.

Die symmetrische Abteilanordnung der Fig. 17 könnte bei ihrem Tiefpunkt auch in Zuglängsrichtung aufgeteilt werden und auf dem Niveau +3 ein Eingangsbereich mit beidseitigen Türen eingefügt werden. Das kann mit einer Anpassung der untersten Stufen wie in Fig. 18 verbunden werden.

Fig. 18 zeigt eine verwandte Platzausnutzung in der unteren Etage neben einem Eingangsbereich **108** auf dem Niveau **+3,** von dem eine Treppe (Pfeil nach oben) zu dem oben weitergeführten Korridor führt. Einige Stufen tiefer (Pfeil nach unten) liegt ein Abteil **109** mit Doppelstockbett **110** und privatem Sanitärbereich, dessen WC-Sitz nebst Technik teilweise unter die nach oben führende Treppe ragt. Der Bereich zwischen Treppe und näherer Außenwand (links) nimmt hier zwei gestapelte Kabinen **111, 112** auf. Anders als der untere Bettplatz **105** in Fig. 17 kann die untere Kabine **111** hier wegen des Eingangsbereichs von der Schmalseite erschlossen werden; dies ermöglicht umgekehrt die Einfügung des Sanitärbereichs ohne Verlust an Bettpositionen. Die obere Kabine **112** könnte auch über die Treppenstufen nach oben bestiegen werden.

Fig. 19 zeigt eine verwandte Platzausnutzung neben einer außenliegenden Treppe von der Position **113** zu einer anderen Etage, an der zwei Abteile **114** und **115** mit recht knappen Abteilfluren untergebracht wurden, wobei das Bett in Abteil **114** quer zu Fahrtrichtung steht und so den Raum in Richtung des Endpunkts der Treppe nutzt und zugleich Zugang zu einer Außenwand erhält. Diese Bauweise ist ähnlich zu Fig. 18 als untere Etage neben einem Eingang dargestellt, funktioniert aber mit leicht abgewandeltem Treppenansatz auch mit gegenläufigen Treppen und/oder in der oberen Etage und erhält dann weitere Ähnlichkeiten zu Fig. 10 und/oder Fig. 17. An Stelle der Abteile **114** und **115** wäre alternativ auch eine zusammengefasste Kabine mit vier Betten oder in der Komfortversion mit zwei unteren Betten vorstellbar.

Ein Abtauchen des Korridors zu Abteilen in der unteren Etage wie in Fig. 17 bis 19 hat den Vorteil, dass sich die benötigte Kopffreiheit auf den Bereich der Treppe und des kurzen unteren Plateaus +3 beschränkt. Bei der in Fig. 10 bis 12 bzw. 13 gezeigten Bauweise muss demgegenüber bereits ein Stück vor dem Antritt der Stufen nach oben für genügend Kopffreiheit oberhalb des noch unten verlaufenden Korridorabschnitts (Niveau +2) gesorgt werden; ähnlich bei anderen Ausführungen.

Fig. 20 bis 22 zeigen eine Abteilanordnung eines zweistöckig nutzbaren Waggons mit einem in der Höhenlage und auch zur anderen Seite des Waggons wechselndem Korridorverlauf in der oberen Etage (links, Fig. 20) der unteren Etage (Mitte, Fig. 21) und im Querschnitt (Fig. 22). Im Bereich einer Eingangstür **67** beginnt eine Treppe **68** zu einem erhöhten Podest (+8), von dem in der oberen Etage des Waggons die Kabinen **69** und **70,** eine Sitzgruppe **71** und von dort drei Abteile **72** bis **74** im oberen Niveau (Fig. 20 links) erreichbar sind. Die Sitzgruppe nimmt zwar nicht die gesamte Breite des Wagons ein, profitiert aber von der zusätzlichen Weite des Luftraums über der Treppe sowie dem Eingangsbereich und Fenstern in der entsprechenden Außenwand. Die Abteile **73** und **74** können die volle Breite des Waggons nutzen, mithin sind hier zwei Abteile mit jeweils eigenem Abteilflur nebeneinander möglich. Die Benutzer dieser Abteile **73** und **74** müssen zwar die Sitzgruppe **71** queren, was eine gewisse Störung der dort Sitzenden bedingt, im Übrigen wird die Sitzgruppe und der benötigte Fußraum jedoch nicht von Bewegungen innerhalb des Zuges gestört. Der Weg durch den Waggon führt von dem Podest über die Treppe **77** in exzentrischer Innenlage treppabwärts zu einem niedrigen Plateau (+2), von dem in der unteren Etage des Waggons zwei Abteile **78** und **79** mit Abteilflur und von dort zugänglichem Sanitärraum **80** erreichbar sind, außerdem die Abteile **81** und **82,** die mit klappbaren Liegen **83** und **84** in zwei gestapelte Kabinen aufteilbar sind. Die unteren Abteile werden jeweils über eine zusätzliche Setzstufe im Abteil erreicht. Das obere Bett **83** des Abteils **81** ist über die Treppe **77** im Korridor leichter erreichbar, das obere Bett **84** entsprechend über die gegenüberliegende Treppe **85.** Entsprechend ist beim Einstiegen in die Kabine **70** weniger Bücken erforderlich, wenn dies von den oberen Stufen der Treppe **77** aus erfolgt; zudem liegt die Höhe des Podestes **+8** unterhalb des Bodenniveaus der oberen Etage und erleichtert auch insoweit den Einstieg in die Kabine **70.** Während Fig. 4 eine Höhenlage der Kabine 2 etwas oberhalb des Boden des dort einstöckigen Waggons zeigte, ist bei Kabine **70** ein bequemer Einstieg auch dann möglich, wenn diese auf der Höhe des Fußbodens der oberen Etage beginnt, was dann auch eine niedrigere Lage der Kabine **69** ermöglicht und somit mehr Abstand von der oberseitigen Begrenzung des Lichtraumprofils. Für Kabine **64** und **65** in Fig. 16 gilt das entsprechend.

Die Stirnseiten der beiden aufteilbaren Abteile **81** und **82** sind gegeneinander in Längsrichtung versetzt (statt an der Querschnittslinie 19-19' zu enden), weil ein Zugang in den mittleren Teil dieser Abteile (Fußraum in Sitzposition) möglich sein soll und zugleich die beiden Treppenantritte nicht zu weit voneinander entfernt sein sollen. Ein solcher Versatz zweiter Abteile ohne Abteilflur natürlich nur möglich, wenn die beiden Abteile auf unterschiedlichen Seiten liegen, weswegen auch der zugehörige Korridor hier die Seite wechselt. Infolge des Seitenwechsels des Korridorverlaufs zur Treppe **85** ergibt sich ein Plateau **(+2),** wo der Weg durch den Waggon großzügig erweitert ist. Der Querschnitt in Fig. 22 trifft gerade diese Stelle mit je vier übereinander angeordneten Kabinen ohne Abteilflur auf beiden Seites der zum Plateau +2 erweiterten Korridors. Eine Verbreiterung der Kabine 69 an ihrer zugangsfernen Seite, d.h. in den Luftraum über dem Plateau +2 hinein, um mehr Kopffreiheit neben der gebogenen Wagenoberseite bzw. Platz für Gepäck zu schaffen, wäre hier grundsätzlich möglich.

In der Fig. 20 und 21 unten folgt ein innenliegender Treppenanstieg **85** auf der nunmehr linken Seite, und die Bauweise könnte achsensymmetrisch gespiegelt zu einem zweiten Eingang auf der anderen (hier linken) Seite des Waggons fortgeführt werden. Die achsensymmetrische Bauweise ergibt auch eine verdoppelte Nutzung von gleichen Bauteilen je Waggon. Vorzugsweise hält der Zug dann an verschiedenen Bahnhöfen an unterschiedlichen Bahnsteigseiten, und die Reservierungen werden so zugeordnet, dass jeweils Plätze in Nähe des zugänglichen Eingangs an die Einsteiger an diesem Bahnhof vergeben werden. Das Dreieck im Eingangsbereich der Tür **67** deutet eine von Doppelstockzügen bekannte Rampe zu einem weiteren Korridorverlauf auf unterer Ebene an. Über dem Eingangsbereich vermittelt ein offener Luftraum Weite.

Figur 23 zeigt die obere Etage eines zweistöckigen Waggonabschnitts mit drei über Treppen bzw. Steigen **94, 94b, 94c** erreichbare Abteilgruppen bzw. "Inseln" **86, 87, 88** mit den jeweiligen Verteilfluren **95a, 95b, 95c** die jeweils Betten an vier Grundrisspositionen aufweisen, denen jeweils Außenfenster zugeordnet werden können. Die Grundrisspositionen **98a, 98b** liegen zwischen Treppe und Außenwand und sind daher lediglich für je zwei Kabinen ohne eigenen Abteilflur und Sitzmöglichkeit geeignet, von denen die obere vom Abteilflur **95a, 95b** aus, die untere vorzugsweise (auch) von der Treppe **94, 94b** aus zugänglich sein kann. Die gestrichelt unterlegte Fläche im Bereich der Abteile **97a, 97b** und **98c** bezeichnet den Bereich, in dem der Korridor in der unteren Etage und damit auch der Fußboden der oberen Etage zu einem Hochpunkt **91** hin angehoben ist. In den Abteilen **96a** und **97a** verläuft der Abteilflur außenseitig. Dabei liegt, wie im Querschnitt der Fig. 26 ersichtlich, die durch den Korridor bedingte Anhebung des Fußbodens in Abteil **97a** unterhalb der Betten. Der Bewegungsraum im oberen Bett unter der Dachausrundung ist durch die Innenlage der Betten ebenfalls vorteilhaft und bei hochgeklapptem Bett kann im Sitzen auf der unteren Liegefläche gut nach außen geschaut werden. Dies erfordert allerdings eine hier dem Abteilflur **95a** zugehörige Verkehrsfläche, um auf die Außenseite der Betten der Abteile **96a** und **97a** zu gelangen, zudem ist hier mit beschränkter Kopffreiheit zu rechnen.

Die Variante der Insel **87** basiert auf einem zusätzlichen Platzbedarf für die Stiege **94b** von weniger als einer Bettlänge, was hier durch Mitbenutzung des Antritts der Stiege **94** zur Insel **86** erleichtert wurde. Die Anhebung bzw. Aufkofferung des Fußbodens liegt hier im Abteilflur von **97b,** betrifft diesen aber infolge des Versatzes der Stiegen weniger stark als in Abteil **97a.** Die Queranordnung des Betts im Abteil **96b** in Verbindung mit kürzeren Abteilfluren der Abteile **96b** und **96d** vergrößert den verfügbaren Verteilflur **95b** und schafft Platz für zwei zusätzliche Sitzplätze. Der Versatz der Ebenen der Trennwand zwischen **98a** und **98b** gegenüber der Trennwand zwischen **97a** und **97b** korrespondiert mit den zu unterschiedlichen Außenwänden reichenden Flurbereichen **95a** und **95b** und löst insoweit die nicht rechtwinklige Grundform der Insel **86** auf.

Die dritte Insel **88** mit Verteilflur **95c** wird über eine außenliegend ansetzende Stiege **94c** erreicht, die im Eingangsbereich **101** beginnt. Dort gibt es zwei Abteile **99** mit Abteilflur, zwei gestapelte Kabinen **100,** die von ihrer Längsseite erreichbar und in ein 2er Sitzabteil umbaufähig sind, und eine quer angeordnete, einzelne Kabine **98c,** die sich etwas angehoben über den Treppenaufgang erstreckt. Das obere Bett der Abteile **99** ist hier jeweils etwas in Richtung Abteiflur verschoben bzw. trapezförmig erweitert, um den größeren Luftraum näher der Mittelachse des Waggons besser zu nutzen. Eine ebenfalls denkbare Variation wären zwei ebenfalls angehobene, nebeneinander längs angeordnete Kabinen, die über die Position der Kabine **98c** hinaus in den Luftraum des Eingangsbereichs **101** ragen.

Figur 24 zeigt ein dazu passende Aufteilung des Untergeschosses mit überwiegend L-förmigen Abteilen **92, 92a, 92b** auf der linken und umbaufähigen 2er-Abteilen **93, 93a, 93b, 93c** auf der rechten Seite des Korridors. Nachdem die außenliegende Steige **94c** zur Insel **88** an einem Eingangsbereich **101** beginnt, liegt sie vorzugsweise auf der von dem Korridor abgelegenen Außenseite, so dass dazwischen noch Platz für ein weiteres Abteil **102** verbleibt, das einzige innenliegende. Im Bereich der Antritte zu den Stiegen ist der Fußboden mit Rampen (alternativ mit z.B. zwei oder drei Treppenstufen) zum erhöhten Punkt **91** bzw. zum Eingangsbereich **101** etwas angehoben. Die Anhebung zum Punkt **91** erleichtert als Nebeneffekt den Zugang zu den oberen Kabinen der Abteile **93b** und **93c.** Diese Anstiege erfolgen jeweils im Abstand von vier Abteillängen und die Höhenvariation des Korridors ist deutlich schwächer ausgeprägt als bei den Ausführungsweisen in Fig. 10 bis 22. Unterhalb der Stiegen ist die Kopffreiheit der Abteilflure der Abteile **92a, 92b** eingeschränkt, weswegen der Zugangsbereich zu Abteil **92a** etwas verlängert wurde, und es verbleibt Stauraum für Gepäck **103.**

Fig. 25 und 26 zeigen die zugehörigen Querschnitte durch die Linien 22-22' bzw. 23-23'.

Fig. 27 zeigt eine über die Stiege **120** erreichbare "Insel" in der oberen Etage eines Doppelstockwaggons. Über deren Verteilflur **118** auf dem Niveau **+10** sind erreichbar: Je zwei gestapelte Kabinen **116** bzw. **119,** ein Abteil mit Abteilflur **117** und ein umbaufähiges Abteil **122.** Die diagonal ausgerichtete Trennwand zwischen **116** und **117** und deren trapezförmige Betten ergeben zusätzlichen Schlafraum mit genügend Kopffreiheit in den Kabinen **116** und in Abteil **117** genügend Bewegungsraum im Abteilflur im Eingangsbereich; besonders die unteren Betten können ggf. von zwei Personen gemeinsam genutzt werden. Am Fußpunkt der Stiege **120** liegt ein Plateau auf dem Niveau **+4,** auf das der sonst in der unteren Etage geführte Korridor über die Stufen **121** und die diagonal gegenüberliegende Stufen **123** geführt wird. Wegen der häufigeren Verwendung sind die Stufen **121, 123** des Korridors breiter als die Stiegen zu den Inseln. Der Verteilflur **118** hat ein kurzes Balkongeländer oberhalb der Treppenstufen **121.** Mit Hilfe des Seitenwechsels des Korridors unten kann in der oberen Etage eine gleichartige Insel mit Abteilflur **124** folgen, die somit den Längenversatz zwischen den Kabinen **119** und dem Abteil **122** aufnimmt und ausgleicht.

Der Querschnitt durch die Ebene 28-28' in Fig. 28 zeigt oben die Kabinen **116** und das Abteil **117.** Unten liegt der von den Stufen **121** fortführende Korridorabschnitt **126** außermittig rechts, weswegen links ein Abteil **125** mit Abteilflur und recht ein umbaufähiges Abteil **127** dargestellt wurde.

In Fig. 29 wurde ein Seitenwechsel des sonst untenliegenden Korridors zwischen zwei Inseln mit Eingängen **137, 138** beidseitig eines Plateaus auf dem Niveau +4 verknüpft: Die Stiege **135** führt zu der Insel mit dem Verteilflur **134** und vier Abteilen **131, 132, 133** und **136** auf dem Niveau **+10.** In Fig. 29 ist unterhalb der gestrichelten Linie die Situation in der unteren Etage dargestellt: Über einige Stufen geht es zum Korridorabschnitt **143,** von dem die Abteile **140, 141, 142** abgehen. Eine weitere, nicht dargestellte Insel oberhalb dieses Bereichs wird über eine weitere Stiege erschlossen und schließt um 180° gedreht an die Abteile **133, 136** an, wie auch die untere Etage jenseits des Zugangs **137** ohne Darstellung um 180° gedreht entsprechend **140** bis **143** fortgesetzt wird.

Die Figuren 30 bis 36 und 38 bis 44 zeigen weitere Varianten für von einer Stiege erschlossene "Inseln" mit 5, 4 bzw. 3 Grundrißpositionen für Betten mit und/oder ohne Abteilflur und Zugang teils von der Schmalseite, teils von der Längsseite, bei denen nur teilweise sämtliche Betten und an einer Außenwand (rechts bzw. links) liegen und auch der Etagenflur direkt oder über die Treppe von außen belichtet werden kann. Die Inseln der Fig. 30, 32, 34, 35 und 38 bis 44 können paarweise mit einer zweiten, in entgegengesetzte Fahrtrichtung gespiegelten Insel gebaut werden. Der Korridor in der anderen Etage wäre vorzugsweise innenliegend, rechts der Mitte. Fig. 36 zeigt zwei gleiche, um 180° gedrehte Inseln

Fig. 30 zeigt eine weitere Variante einer mit Fig. 27 verwandten Insel mit trapezförmigen Betten in Abteilen **144, 145** und Kabinen **146,147** sowie einem Balkongeländer **148** zur Absicherung des Verteilflurs gegen den Luftraum der Treppenstufen vom Korridor, wobei auch hier nur die untere Kabine **146** einen bequemeren Einstieg über die Treppe nutzen kann.

Fig. 31 zeigt eine Insel mit außenliegender Stiege, einer von der Treppe zugänglichen einzelnen Kabine **149** neben einem Abteil **150,** das ein unteres Bett **151** und ein quer zur Fahrtrichtung orientiertes oberes Bett **152** aufweist, das sich nur teilweise mit den Positionen der unteren Betten **149** und **151** überschneidet und somit die Möglichkeit zum aufrechten Sitzen in Bett **151** belässt. In dieser Anordnung kann die Insel auf ca. 4 Meter Waggonlänge begrenzt werden, Vorteilhaft an dieser Anordnung ist, dass wenigstens die gesamte Länge eines Abteils für die Stiege zur Verfügung steht, allerdings kann eine außenliegende Stiege in der unteren Etage zu Einbußen an Bettplätzen führen. Soweit neben dem Fußpunkt der Stiege auch der sonst unten verlaufende Korridor im schraffierten Bereich erhöht ist, muss die Kabine **153** nach oben ausweichen und die verbleibende Höhe reicht ggf. nur für eine einzelne Kabine; daneben ist ein weiteres Abteil **154** mit Abteilflur.

Fig. 32 zeigt eine mit Fig. 27 verwandte Variante einer Insel im OG mit längs verlaufender Zugangstreppe zum Verteilflur **155.** Bei zwei Grundrisspositionen für gestapelte Kabinen **156, 157,** einem 4er Abteil **158** (mit längs versetzten Betten) und einem 2er Abteil **159** gibt es hier zehn Betten auf ca. 5 Meter Wagenlänge sowie Bedarfs-Sitzgelegenheiten entlang der Treppe und auf der den Zugang zu den oberen Kabinen erleichternden Stufe zwischen **156** und **157.** Wegen der über volle zwei Meter erstreckten Treppe muss der zugehörige, innenliegende Korridor im EG weniger oder gar nicht angehoben werden, vorzugsweise bei Kopplung von zwei gespiegelten Inseln dieser Bauart.

Fig. 33 zeigt eine weitere Variante eines OG mit Vierbettabteilen **160, 170.** Von dem Verteilflur **162** aus erreicht man außerdem sechs Kabinen **161, 163, 165, 166**, wobei die untere Kabine **165** wegen der Anhebung und Kopffreiheit des unteren Korridors im Bereich **164** als Einzelbett ausgeführt ist, darüber aber eine breitere Kabine 166 Platz findet. Diese Kabinen grenzen auch an den Verteilflur **168** der gepaarten Insel. Wären dort nicht zwei Sitze **167** platziert, könnte der Zugang zu den Kabinen **165, 166** auch auf beide Seiten verteilt werden. Auf gut acht Meter Länge finden somit bis zu 21 Personen Platz; das entspricht in etwa der Platzausnutzung bei Bestuhlung mit 4er Reihen. Bei nicht ganz voller Auslastung stehen die beiden Sitzplätze **167** als Ausweichraum für wache Fahrgäste mit Kabinen in Liegeposition zur Verfügung. Die Kabinen **163** und **169** wären auch in ein Sitzabteil umbaufähig, zu dem in diesem Fall von den obersten Treppenstufen aufgestiegen werden müsste.

Fig. 34 zeigt eine weitere Variante, bei der Verteilflur **175** nicht bis zur Außenwand reicht, mithin eine volle Ausnutzung der Länge der Insel durch beidseitige Betten ermöglicht. An Stelle eines ohnehin beengten Abteilflurs für das Abteil **176** rechts neben der Treppe wurde der Sitzplatz **177** eingefügt. Grundsätzlich ist es vorteilhaft, jeder Treppe eine Insel mit möglichst großen "privaten" Bereichen zuzuordnen. Indem diese die gesamte Waggonbreite einnehmen, wird auf der entsprechenden Längsausdehnung der Etage kein Korridor benötigt, auch keine zusätzliche Treppe, und der Anteil der "privat" vermietbaren Fläche wird vergrößert. Gestrichelt angedeutet ist daher eine mögliche Verlängerung der beiden Abteile **173, 174** über ihren Abteilflur durch zwei weitere Betten **171** bzw. einen sonstigen Aufenthaltsbereich **172** mit Arbeitstisch sowie durch Sanitärräume. Im Falle dieser Erweiterung wird mit einer Treppe und einem sehr kleinen Verteilflur ein ca. 7 Meter langer Inselbereich erschlossen, von dem die in der Abbildung oberen 5 Meter vollständig als privat vermietbare Fläche mit relativ großzügigen Abteilen nutzbar sind. Die Bauweisen der Fig. 32. bis 34 eignen sich wegen der dann größeren Kopffreiheit auch sehr gut für Inseln in der unteren Etage in einem Waggon mit oben durchgehendem Korridor.

Fig. 35 zeigt zwei "Inseln" mit zwei besonders großen Abteilen (Suiten) **181, 182** die die gesamte Breite des Waggons einnehmen und beidseitigen Ausblick ermöglichen. Der Wegfall eines Korridors in dieser Etage wird also für einen sonst nur in Großraum- und Salonwagen möglichen Rundumblick der Suiten genutzt. Sie erhalten vorzugsweise keine Stockbetten. Beide Suiten verfügen neben ihren festen Betten über Klappbetten bzw. aufklappbare Sessel **180, 183,** die hier vor den Eingangstüren der Suiten dargestellt sind. Damit wird vorteilhaft ausgenutzt, dass die Suiten mit ihren eigenen Sanitärräumen in der Nacht an sich "autark" sind, und somit keine Veranlassung besteht, während der Schlafenszeit die Zugangstür zu nutzen. Im Notfall kann der Raum über die Klappbetten **180, 183** hinweg durch die jeweils nach außen öffnende Tür verlassen werden. Beide Klappbetten würden aber auch um 90° gedreht Platz finden.

Die Abteilbereiche neben den Aufgängen der beiden Inseln sind auch hier so knapp gehalten, dass direkt an den Fußpunkt der Treppe anschließend ein Aufgang zu einer weiteren "Insel" möglich wäre, ebenso ein Eingangsbereich vom Bahnsteig auf mittlerem Niveau. Vor dem Eingang zur kleineren Suite befinden sich die Abteile **178, 179** in bereits dargestellter Bauweise. Neben der luxuriöseren Suite **182** ist hier ein bequemerer, weil weniger steiler Aufgang und ein Abteil **184** mit relativ großem Abteilflur dargestellt, als Variante die Nutzung eines Teils des Luftraums über der Treppe mit einem weiteren Bett **185,** so dass sich ein 3er Abteil ergäbe.

Fig. 36 und Fig. 37 zeigen eine Variante mit einem grundsätzlich in der unteren Etage (Fig. 37) durchlaufenden Korridor, der mit den Treppenstufen **193** auf ein quadratisches Zwischenpodest (Höhenmarkierung **+4)** ansteigt, von dem weitere Treppen zu zwei "Inseln" im Obergeschoß in der Höhenlage **+10** abgehen. Der Korridor wechselt hier bei seinem Hochpunkt **+4** die Seite, was die Verwendung gleicher Fertigteile auf beiden Seiten ermöglicht und die Raumanordnung verbessert. Das quadratische Zwischenpodest ist gegenüber einer 45°-Ausrichtung leicht verdreht, womit die beiden unteren Treppen etwas breiter sind als die beiden nach oben führenden, die als Stichwege weniger Verkehr aufnehmen. Durch die Winkelabweichung gegenüber 45° sind die oberen Treppen auch etwas verlängert und die unteren bequemer zu gehen. Im EG verbessert die trotzdem verbleibende Anschrägung der untersten Treppenstufe den Zugang zu Abteil **192** in dessen Abteilmitte, während der Zugang zum Abteilflur des Abteils **193** wegen der Kopfraumeinschränkung durch die obere Treppe (Schraffierung) ohnehin nur am abgewandten Ende möglich ist. Im Obergeschoß (Fig. 36) ermöglicht der Seitenwechsel der Treppen zwei um 180° verdrehte Inseln, deren beidseitige Abteilpaare **188, 189** so gegeneinander verschoben sind, dass der Verteilflur bis zu der jeweils Treppen-abgewandten Außenwand reicht. Dort erfolgt dann der Einstieg zu den Kabinen **187, 189.** Zusammen mit den Vierer-Abteilen **186** werden also in der oberen Etage 20 Bettplätze auf ca. 9 Meter Waggonlänge geschaffen. Infolge der Verdrehung des Podestes und des gegenseitigen Versatzes der beiden Abteilpaare **188, 189** ist das obere Ende der oberen Treppen auch näher an der Mitte der Abteile **188,** wo diese bei Sitzposition der Liegen betreten werden. Der Platz bei dem Bezugszeichen **190** und der angrenzende Luftraum oberhalb der untersten Treppenstufen **193** könnte als Abteilflur eines Abteils an der Stelle **189,** für einen zusätzlichen Sitzplatz bzw. als Gepäckablagebereich genutzt werden, oder, wie gezeichnet, mit einem Geländer und Luftraum für einen großzügigeren Raumeindruck sorgen.

Fig. 38 zeigt eine Insel, bei der sich die Treppe **198** über die volle Länge der angrenzenden Kabine **197** bzw. des Abteils **199** erstreckt. Ein kleiner Verteilflur **196** wurde nun zu Lasten der Abteilflure **195** abgegrenzt. Er reicht nicht zu einer Außenwand, womit die Insel lediglich ca. 4 m Meter Länge einnimmt, der Abteilflur aber keinen Fluchtweg nach außen aufweist. Nachteilig ist weiterhin, dass die Bettposition **197** nur über die Treppe **198** zugänglich ist, was den Zustieg zu einer oberen, gestapelten Kabine praktisch ausschließt, so dass hier lediglich ein Einzelbett in Betracht kommt. Das ermöglicht immerhin einen jederzeitigen Umbau zwischen Sitz und Liegefläche nach Belieben des einen Fahrgasts. Bei einer vergleichbar gestalteten Insel in unterer Etage wäre der Zugang zu einer unteren Kabine in ähnlicher Weise erschwert. Eine Fortsetzung der oben dargestellten Abteile über die Abteilflure **195** hinaus ähnlich wie in Fig. 34 würde die Einschränkung des Bewegungsraum in diesen Abteilen relativieren.

Die Fig. 39 bis 43 zeigen Varianten von Inseln in kompakter Bauweise mit quer zur Fahrtrichtung gestellten Betten. Sie beruhen vorrangig auf zu Kabinen umbaufähigen Zweierabteilen **200, 204** (Fig. 39, 41), auf abgeschlossenen Abteilen mit Abteilfluren **202, 207** (Fig. 40, 43) mit entsprechend mehr **(201, 205, 206)** oder weniger **(203, 208)** Bewegungsraum im Verteilflur der jeweiligen Insel und bieten Platz für sechs (Fig. 41, 43) bis zehn (Fig. 39, 42) Fahrgäste. In Fig. 41 bis 43 verläuft die Treppe an der Wagenaußenseite und nutzt somit vorteilhaft den Bereich des OG mit eingeschränktem Lichtraum an den Seiten des Wagens. Der höhere Bereich in Wagenmitte steht damit für den Flurbereich und für die Kopffreiheit der (oberen) quer orientierten Betten zur Verfügung.

Besonders Figur 39 funktioniert auch ohne Anhebung der unteren Korridorbereichs. Figur 42 zeigt eine Mischung mit Sitzplatzbereichen und Kabinen mit eigenem Sanitärraum.

In Figur 43 ist angedeutet, dass in einem Abteil mit Abteilflur, das mithin nicht in Kabinen aufteilbar ist, ein Umbau des unteren Bettes **209** in zwei in bzw. gegen Fahrtrichtung orientierte Sitzplätze möglich ist, auch wenn damit keine Aufteilung in zwei Kabinenbereiche erreicht wird, besonders bei einem Bett **209** an der Außenwand wegen dem besseren Ausblick. Bei quer zur Fahrtrichtung eingebauten Betten ist hingegen ein Abklappen der oberen Liegefläche und Verwendung als Rückenlehne ausreichend, um beiden Reisenden seitlichen Ausblick zu ermöglichen.

In Fig. 44 weisen die beiden Abteile **282** neben den seitlichen Betten **283** eine weitere Bettposition **281** auf und können je nach Platzverhältnissen als 2er, 3er oder 4er Abteil hergestellt werden. Damit kann vorzugsweise der Raum über einem Eingangsbereich in der unteren Etage genutzt werden oder anders schlecht nutzbarer Platz mit begrenzter Höhe im Bereich der Drehgestelle. Der Bereich mit der Zugangstreppe und den übrigen Kabinen **284** bzw. Abteilbereichen **285** ist mit anderen Varianten von Inseln austauschbar.

Fig. 45 zeigt weitere erfindungsgemäße Ausprägungen in einem Zugabschnitt in der unteren Etage eines Doppelstockzugs. Auf einer Seite des Eingangsbereichs **210** liegt ein WC **211,** ein Abteil für eine Person mit erhöhter Bettposition **212,** das darunter bereits Platz für die Drehgestelle freihält, und der Beginn der Treppe **213** zum OG. In ebenfalls über die Drehgestelle erhöhter Position wird von der Mitte der Treppe **213** aus ein weiteres Abteil mit erhöhter Fußbodenhöhe (+5) erreicht. Neben dem Abteilflur mit Stehhöhe reicht der Platz bis zur Fußbodenhöhe der oberen Etage lediglich für ein Einzelbett **214** aus. auf gleicher Höhe wie die Bettposition **212.**

Auf der anderen Seite des Eingangsbereichs **210** sind zwei gestapelte Kabinen **215** entlang der Außenwand über ihre Schmalseite zugänglich. Mit einer Breite von ca. 1,20 m können sie auch von zwei Personen gebucht werden. Der erste Korridorabschnitt wird von je vier Sitzplätzen **216, 217** eingegrenzt, so dass auf diesen zwei Metern Wagenlänge bis zu 12 Personen untergebracht werden können. Es folgt ein Korridorabschnitt mit beidseitigen Doppelabteilen, wovon das eine **218** einen Abteilflur und einen Sanitärbereich mit Duschmöglichkeit aufweist. Die Zuordnung einer kleinen Duschkabine zum Abteil hat den Vorteil, dass der Abteilflur auch anlässlich des Duschens zum Umkleiden und die Betten zum Ablegen der Kleidung genutzt werden können, die Duschkabine notfalls auch einen Teil des Gepäcks aufnehmen kann. Anders als bei gemeinschaftlichen Duschen wird kein feuchtnasser Raum dem nächsten Mitreisenden hinterlassen und eine Überbelegung kurz nach Abreise bzw. kurz vor Ankunft des Zuges vermieden. Das technisch aufwändigere WC **211** wird hingegen mit anderen Reisenden geteilt, zumal sich Toilettenbesuche zeitlich mehr verteilen und auch in den Bahnhöfen erfolgen können. Das andere Abteil **219** weist in Sitzposition Stehhöhe auf und wird in Liegeposition in zwei gestapelte Kabinen unterteilt. Es folgt ein zum Korridor hin offener Block mit neun Sitzplätzen mit 3er-Sitzanordnung **120, 121** vis-a-vis auf der einen Seite des Korridors und drei quer zur Fahrtrichtung orientierten Sitzplätzen **122** auf der schmaleren Seite. Am Korridorende sind zwei weitere Abteile **124, 125** mit privatem Vorraum mit Stehhöhe und Stockbetten und infolge der Querstellung des Bettes in Abteil **125** noch Platz für einen vierten Sitzplatz **123** an der Korridor-seitigen Außenwand. Die Queranordnung von insgesamt 12 Sitzen mit Fußraum im Korridor ist deshalb zumutbar, weil bei einem Nachtzug die Reisenden direkt den Waggon mit ihren reservierten Plätzen einnehmen können, im Schlaf und bei längeren Strecken ohne Halte ohnehin weniger Bewegung auftritt, und weil es sich hier um eine "Sackgasse" handelt. In der zugehörigen oberen Etage wären dann in stärkerem Maße geschlossene Kabinen vorstellbar, quer zu einem schmalen Korridor angeordnete Sitzplätze wären dort wegen dem durchgehenden Korridor ungünstiger.

Bei voller Auslastung werden somit 32 Personen auf ca. 12 Metern Zuglänge der unteren Etage transportiert, davon 14 in Betten. 2 Einzelbetten entfallen auf die Nutzung des Schlafbereichs im Bereich der Drehgestelle. Die bis zu sechs Reisenden in gestapelten Kabinen **215, 219** verteilen sich beim Ein- und Aussteigen auf verschiedene Teile des Korridors bzw. den gesamten Bereich zwischen den Türen. An Reisetagen mit mäßiger Auslastung können an den Positionen **216, 217, 220, 221** und **222/223** fünf weitere Reisende halbwegs bequem liegen, bzw. stehen dort Sitzmöglichkeiten für noch nicht bzw. nicht mehr liegende Personen aus den Abteilen zur Verfügung. Die Bettplätze der unteren Etage sowie die obere Kabine **215** könnten auch von bis zu acht Alleinreisenden als Einzelabteile bzw. Einzelkabinen genutzt werden. Damit ist eine große Vielseitigkeit für unterschiedlich starke Verkehrsnachfrage und für Tage mit unterschiedlichen Ansprüchen der Reisenden (z.B. Alleinreisende an Messen, gemeinsam Reisende zum Ferienfanfang) gewährleistet. IN der zugehörigen oberen Etage

Fig. 46 zeigt den Grundrissausschnitt eines umgebauten Abteilwagens, bei dem ein 6er-Abteil 126 wie in konventionellen Liegewagen, ein 6er Sitzabteil **127,** ein Bereich mit gestapelten Schlafkabinen **128, 129** und ein weiteres Sitzabteil **130** aufeinander folgen. Der Bereich mit Schlafkabinen könnte durch Umbau eines konventionellen, leergeräumten Abteils geschaffen worden sein, in das eine Trennwand und Zwischenböden eingezogen wurden, so dass jeweils eine breitere **128** und eine schmalere **129** Kabine je Etage entstanden sind. Bei 3 Etagen und Doppelbelegung der breiteren Kabinen können somit bis zu 9 Personen Platz finden und trotzdem eine begrenzte Privatsphäre genießen. Durch die weiteren Liege- und Sitzplatzabteile entlang des Korridors können sich diese neun Personen beim Ein- und Aussteigen über den Gangbereich **131** vor den Kabinen hinaus verteilen, d.h. durch die Mischung der Abteiltypen wird die sehr enge Belegung im Bereich der Kabinen erst praktikabel. Auf diese Weise können mehrere erfindungsgemäße Merkmale auch mit seitlichem Korridor erreicht werden, allerdings ohne den zusätzlichen Vorteil der Umbaufähigkeit von Kabinen in ein 2er Sitzabteil.

Fig. 47 zeigt einen Waggonabschnitt mit trapezförmigen Schlafbereichen gemäß Anspruch 10. An einer Mittellinie **236** quert der Korridor die Wagenmitte, die angrenzenden Abteile **235** bzw. Kabinen **234, 237, 238** beidseitig eines innenliegenden Korridorabschnitts **233** sind jeweils um 180° zueinander verdreht und haben dort dieselbe Breite. Diese Bauweise kann besonders bei durchgehendem Korridor in der oberen Etage die Begrenzungen des Lichtraumprofils berücksichtigen, indem das Fußende der oberen Betten näher an die Dachschräge heranrückt. Im Vergleich zu einer früher verwirklichten Lösung mit Richtungswechsel des Korridors nach jedem Abteil verläuft der zick-zack-förmige Verlauf des Mittelgangs jeweils auf der Länge von zwei Abteilen geradlinig. In abgewandelter Bauweise könnte der Korridor auch über drei Abteillängen schräg zur Fahrtrichtung verlaufen, wenn die Symmetrielinie durch die Mitte von zwei um 180° gedreht gegenüberliegenden Abteilen bzw. Kabinen verliefe. Auch ein gewisser Versatz in Längsrichtung der Abteile beidseitig des Korridors wäre möglich, dies würde infolge der trapezförmigen Abteile zu einem breiteren bzw. schmaleren Korridor führen und ermöglicht umgekehrt eine freiere Gestaltung der Abteilbreiten. Bei dem Richtungswechsel wäre der Versatz durch Einschieben kürzerer Elemente (z.B. Sitze) auszugleichen.

Durch Einschiebung eines Abschnitts mit einem rechtwinkligen Abteil **240** verläuft der Korridor im Abschnitt **241** ein Stück parallel zur Fahrtrichtung und es halbiert sich der Knickwinkel des Korridors an den Knickpunkten **239 , 243** im Vergleich zu einem einzigen Richtungswechsel bei **232.** Durch die Mischung von Abteilen **235, 240, 244** mit Abteilflur und Kabinen **234, 237, 238** wird wiederum einem Gedränge im Flur entgegengewirkt, insbesondere bei Umbaubarkeit auch von trapezförmigen Zweier-Kabinen **234, 245** zu Sitzpaaren. Die Einfügung von Sitzen **242,** wo sich der Korridor ohnehin einer Wand nähert und der durch die Fußbreite der Kabinen **238, 245** vorgegebene Platz ggf. nicht für eine rechtwinklige Kabine ausreicht, erhöht die Wahlmöglichkeiten und ermöglicht Tageslicht und einen Fluchtweg.

Fig. 48 zeigt gemäß Anspruch 3 ein unteres Abteil **248** mit Stehhöhe, dessen Bodenebene um deutlich weniger als Stehhöhe unterhalb des längs durch den Waggon verlaufenden Korridors **247** liegt und das über Treppenstufen mit dem Korridor verbunden sein soll, und darüber vom gleichen Korridor aus zugängliche Abteile **246,** die keine Stehhöhe aufweisen. In Sitzposition liegt auch im umbaufähigen Abteil **249** Stehhöhe vor.

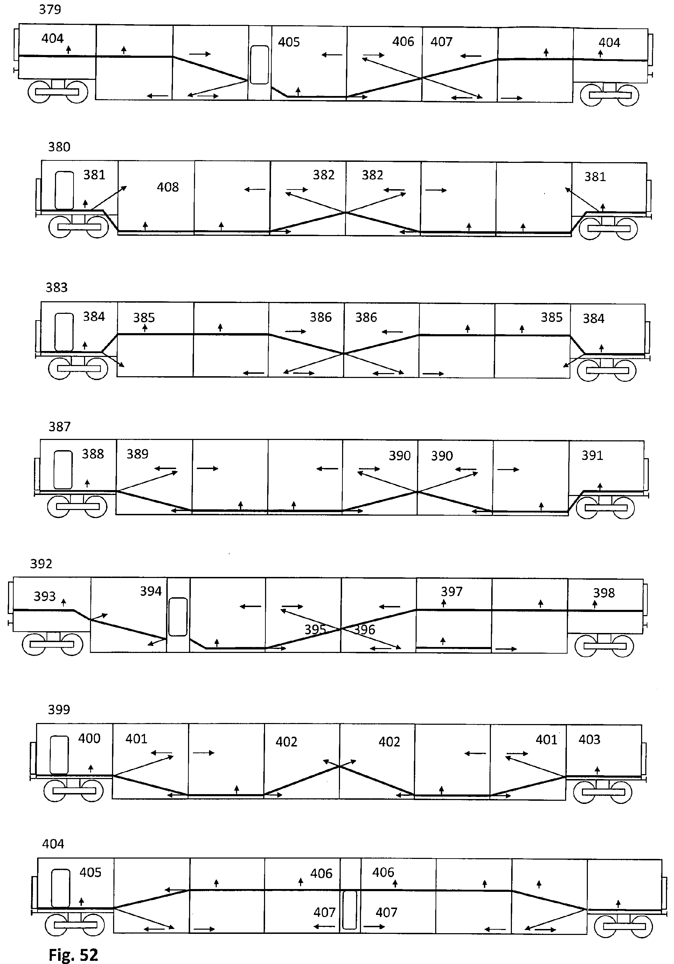

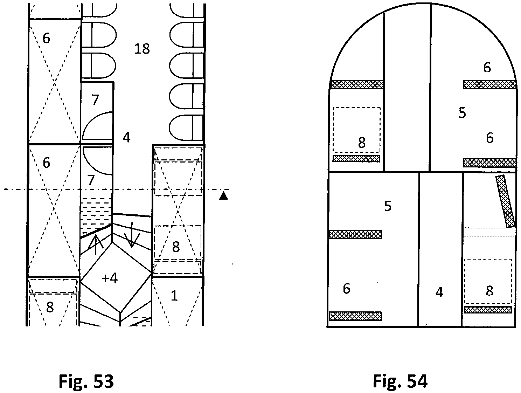

Fig. 49 zeigt vier "isolierte" Abteile **252** bis **255** in der unteren Etage eines zweistöckigen Eisenbahnwaggons gemäß Anspruch 15, die von einem getrennten Flur **256** aus erreichbar sind, der vom Bahnsteigniveau aus zugänglich ist, aber im Normalbetrieb nicht mit den übrigen Bereichen des Waggons verbunden ist (in Fig. 52 als Abteile **407).** Eine Zugangsmöglichkeit für Notfälle kann dann mit einer Leiter zu einer Klappe im Fußboden des in der oberen Etage durchlaufenden Korridors hergestellt werden. Damit wird an historische Bauweisen von Zügen ohne durchgängigen Korridor angeknüpft, was heutzutage durch vorgebuchte Plätze und Videoüberwachung des abgegrenzten Bereichs wieder praktikabel wird. Der Bereich bzw. jedes der Abteile sollte dann eigene Sanitärräume **250, 251, 257, 258** aufweisen.

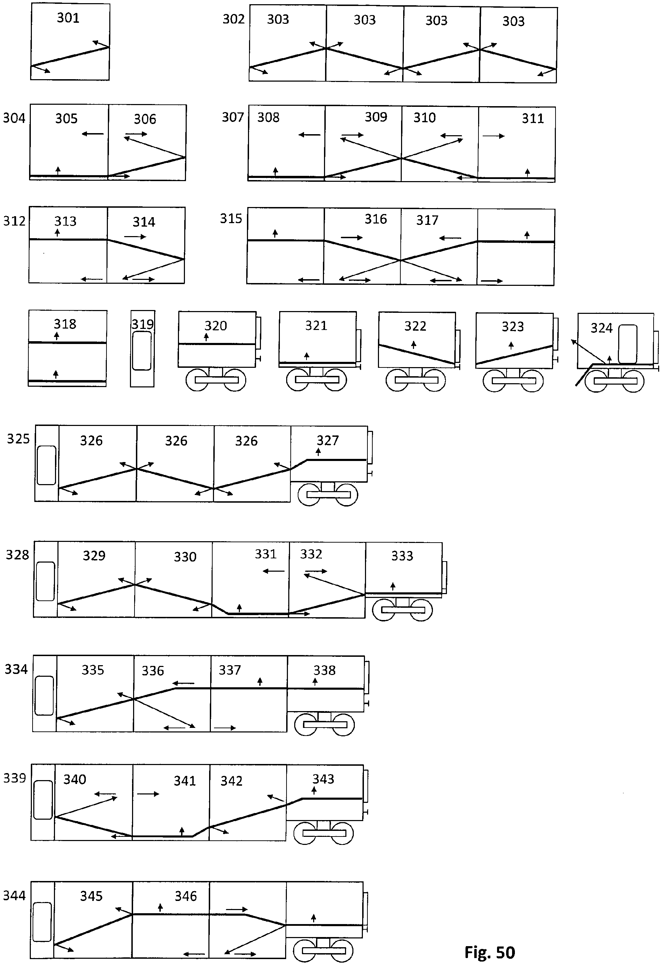

Fig. 50 bis 52 stellen als Seitenansicht bzw. Längsschnitt die Grundprinzipien des Korridorverlaufs und mögliche Reihungen dieser Grundtypen in einem zweistöckigen Eisenbahnwagen dar, bei denen durch Sackgassen-ähnliche "Inseln", in denen Abschnitte einer Etage keinen Korridor benötigen, sowie durch Höhenvariation des Korridors, der damit zwei Etagen im Wechsel erschließt, die Raumausnutzung verbessert werden kann. Die Prinzipbilder sind grundsätzlich für innenliegende wie für außenliegende Treppen bzw. Korridore anzuwenden sowie bei deren Seitenwechsel, vorzugsweise aber für beidseitig entlang der Außenwände angeordnete Betten in beiden Etagen. Jedes der Quadrate steht für einen Waggonabschnitt mit der Längserstreckung eines Bettes nebst Nebenflächen, also meist um die 2 Meter plus Platz für private Sanitärräume und ggf. kurze Querflure, die Prinzipdarstellung ist also im Vergleich zur tatsächlichen Höhe zweistöckiger Waggons gestreckt. Ein kurzer Pfeil symbolisiert meist die Zugangsrichtung zu jeweils einer Abteils-Grundrissposition je Seite und je Etage, die längen, schrägen Pfeile die Stiegen für den Zugang zu einer "Insel" mit Erschließung von Abteilen und Betten in zwei benachbarten Längenabschnitten in der erreichten Etage. Die fette Linie steht für den durchgehenden Weg durch den Waggon bzw. den jeweiligen Waggonabschnitt. Die schrägen Linien stehen meist für Treppen; sie nehmen vorzugsweise nur einen Teil der Länge eines Abteils ein, um sich entsprechend nur auf kurzer Strecke über zwei Etagen gleichzeitig zu erstecken.

Der Waggonabschnitt **301** besitzt einen im Grundsatz über zwei Etagen wechselnd verlaufendem Korridor, der auf der Länge eines Bettes (ein Quadrat) obere und die untere Abteile jeweils von der entgegengesetzten Seite erschließt, nämlich hier die untere Etage von links und die obere von rechts. Grundrissanordnungen dazu sind in den Fig. 10 bis 22 dargestellt. Daneben zeigt die Reihung **302** eine Reihung von vier derartigen Abschnitten **303.**

Die Reihung **304** verbindet zwei Waggonabschnitte mit einem im linken Abschnitt **305** unten verlaufenden Korridor, der im rechten Abschnitt **306** etwas angehoben wird. Wie auch in den Grundrissanordnungen der Fig. 23 bis 44 dargestellt, zweigt dort eine weitere Treppe (Stiege) ab, über die eine "Insel" in der oberen Etage mit Abteilen in beiden Abschnitten **305** und **306** erschlossen werden. Die Reihung **307** besteht aus zwei Paaren solcher Abschnitte: Von einem Hochpunkt des Korridors zwischen den Abschnitten **309** und **310** zweigen hier die Treppen zu zwei Inseln im Obergeschoss der Abschnitte **308** und **309** bzw. **310** und **311** ab.

Die Reihungen **312** und **315** zeigen Waggonabschnitte nach demselben Prinzip, jedoch mit oberseitig durchgehendem Korridor und Abzweigungen nach unten.

Im Vergleich der Reihung **302** mit **307** ist erkennbar, dass von dem Hochpunkt des Korridors in Reihung **307** zwei Inseln mit hier je 2 Bettlängen erschlossen werden, während in Reihung **302** (bzw. den Bauweisen gemäß Fig. 10 bis 22) zwei Hochpunkte des Korridors benötigt werden, nämlich jeweils nach 2 Bettlängen (soweit nicht eine Abwandlung erreicht wird, wie z.B. in Fig. 20 durch den Einschub einer Sitzgruppe). Hingegen geben die auf Abschnitt **301** beruhenden Kombinationen bessere Möglichkeiten, den Korridor in der unteren Etage außenseitig anzuordnen und Abteile mäßiger Größe mit dazu quer zum Korridor orientierten Betten zu erschließen, wie in Fig. 11 oben.

Weitere als Teile eines Baukastens dargestellte Waggonabschnitte besitzen einen Korridor in beiden Etagen **318,** eine Eingangstür **319** oder beziehen sich auf den nicht doppelstöckig nutzbaren Teil eines Waggons über den Drehgestellen mit Korridor und Übergang zum nächsten Waggon in den oberen Etage **320,** mit Korridor auf dem Niveau einstöckiger Eisenbahnwagen **321** (aber höher als die untere Etage im zweistöckigen, mittleren Teil des Waggons), mit abfallendem **322** oder ansteigendem **323** Korridorverlauf zur Anpassung an die Höhenlage des Wagenübergang, sowie einen Abschnitt **324** mit dem Übergang zum nächsten Waggon, in dessen Länge sich eine Außentür befindet und in dem bereits eine Verzweigung zu Räumen auf zwei Ebenen des angrenzenden Abschnitts erfolgt. Je nach Ausführung mit Jacobs- oder einzelnen Drehgestellen kann der einstöckige Endabschnitt **320** bis **324** eine größere Länge mit zusätzlichen Betten oder Nebenräumen erhalten.

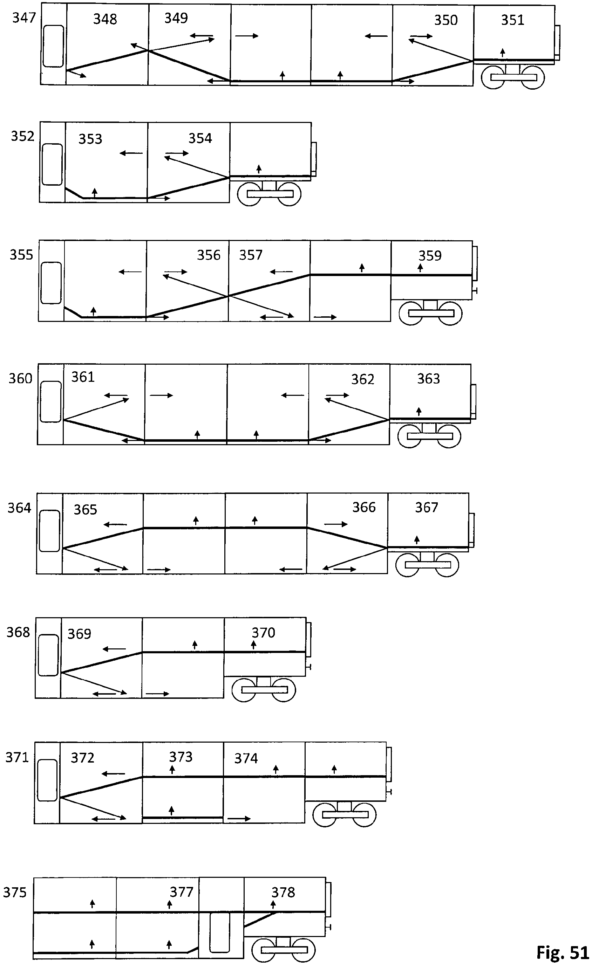

Aus diesem Baukasten wurden in Fig. 50 und 51 exemplarisch verschiedene Reihungen zwischen einer Eingangstür bis zum Wagenübergang zusammengesetzt. Je zwei dieser Reihungen können mit gemeinsamem Eingangsbereich zu einem Waggon zusammengefasst werden. Fig. 52 zeigt dann Beispiele für vollständige Waggons.

Der Zugang zu einigen Abteilen in der rechten Hälfte der dargestellten Reihungen in Fig. 52 wäre jeweils von einem rechts angekoppelten Waggon und sodann über den Übergang über weniger Treppen möglich als über die "eigene" Tür. Z.B. sollten Reisende mit Plätzen in der oberen Etage der Abschnitte **397** bis **398** vorzugsweise zu dem Ein- und Ausgang im benachbarten Waggon geleitet werden.

In der Mitte der letzten Reihung **404** befinden sich vier Abteile **407,** die gemäß Anspruch 15 bzw. Figur 49 einen eigenen Zugang besitzen, aber keine Verbindung zu dem Korridor aufweisen, der die darüber befindlichen Abteile **406** erschließt und über die Eingangstür im Segment **405** erreicht wird.

Die dargestellten Kombinationen sind jeweils mit unterschiedlicher Grundrissgestaltung der einzelnen Abschnitte möglich und sollen die große Zahl zusätzlich möglicher Kombinationen andeuten.

## Patentansprüche

1. Anordnung von Abteilen und weiterer Nutzungsmöglichkeiten, in einem Eisenbahnwaggon mit Liege- bzw. Schlafabteilen und wenigstens einem längs durch den Waggon verlaufenden Korridor, **dadurch gekennzeichnet, dass** ein Teil der von dem Korridor erreichbaren Liegeplätze in Form von zum Korridor offener und direkt von dort zu besteigender Liegeplätze (17) und/oder in Form von kabinenartigen Abteilen (2, 3, 8, 11), die keine Stehhöhe und keine Standfläche am Boden neben der designierten Liegefläche aufweisen, wenn sich die designierten Liegeflächen in Liegeposition befinden, ausgeführt wird, und sich seitlich daneben in unmittelbarer Nähe ein weiterer Teil der Liegeplätze in Abteilen (5, 8) mit festen Umgrenzungen befindet, die einen Bereich mit Stehhöhe neben der bzw. den Liegeflächen (6) innerhalb des Abteils (5) aufweisen; dabei können jeweils mehrere zum Korridor offene Liegeflächen bzw. Abteile ohne Stehhöhe übereinander liegen.

2. Anordnung von Abteilen und Sitzen in einem Eisenbahnwaggon mit wenigstens einem längs durch den Waggon verlaufenden Korridor, **dadurch gekennzeichnet, dass** sich in dem Waggon Abteile (8) befinden, die keine Möglichkeit zum aufrechten Sitzen mit unterhalb der Sitzfläche abgestellten Beinen aufweisen, wenigstens dann, wenn sich die designierte Liegefläche (bzw. mehrere übereinander angeordnete Liegeflächen) in Liegeposition befinden, und sich in geringer Entfernung innerhalb des Waggons zum Korridor hin offene Sitzmöglichkeiten (12, 18, 19) befinden, die nicht räumlich bestimmten Abteilen ohne Sitzmöglichkeit zugeordnet sind und die von ihrer Ausführung und Anordnung nicht nur als Notsitze zu verstehen sind.

3. Anordnung von Abteilen in einem Eisenbahnwaggon, **dadurch gekennzeichnet, dass** der Waggon Abteile (248) aufweist die mindestens in einer Position Stehhöhe aufweisen, deren Bodenebene um deutlich weniger als Stehhöhe unterhalb der angrenzenden Bodenebene eines längs durch den Waggon verlaufenden Korridors (247) liegt und die über Treppenstufen mit dem Korridor verbunden sind, und dass darüber vom gleichen Korridor aus zugängliche Abteile (246) angeordnet sind, die keine Stehhöhe aufweisen, wobei der Boden des Korridor einen Höhenunterschied aufweisen kann.

4. Anordnung von Abteilen und Bauweise eines Korridors in einem Eisenbahnwaggon, bei der in mehr als einer Etage Abteile angeordnet sind, **dadurch gekennzeichnet, dass** der durch den Waggon durchlaufende Korridor zusätzlich zu einer evtl. einmaligen Überwindung der Höhendifferenz zwischen Eingängen und höher und tiefer gelegenen Korridorbereichen sowie dem Übergang zum Nachbarwaggon eine weitere Höhenbewegung aufweist, wobei er bei Durchgang in Zuglängsrichtung wenigstens einmal im Bereich der Abmessungen eines Abteils (44, 47, 50, 51) in einer Richtung ansteigt und im Bereich der Abmessungen eines weiteren, vorzugsweise des nächsten, Abteils wieder abfällt, wobei vorzugsweise der Aufwärts- und Abwärtsverlauf des Korridors nur einen Teil der Höhendifferenz zwischen der Fußbodenhöhe der oberen und unteren Abteile überbrückt und mit weiteren Stufen am Tiefpunkt des Korridorverlaufs der Zugang zu den unteren Abteilen hergestellt wird und/oder mit weiteren Stufen (+7, +8, +9, +10) am Hochpunkt des Korridorverlaufs der Zugang zu den oberen Abteilen.

5. Anordnung von Abteilen in einem Eisenbahnwaggon nach einem der vorherigen Ansprüche mit einem Korridor, der seine Höhenlage ändert, **dadurch gekennzeichnet, dass** in wenigstens einem Abschnitt des Waggons auf der breiteren Seite neben dem Korridor in zwei Etagen Abteile (46, 50 bzw. 58, 59) sind, die Betten in Längsrichtung und einen Abteilflur mit Stehhöhe entlang eines Teils der Bettlänge aufweisen, die jeweils über im Grundsatz quer zum Korridor verlaufende Stufen, von einem Hochpunkt des Korridors nach oben bzw. von einem Tiefpunkt des Korridors nach unten, zugänglich sind, wobei die im Bereich der unteren, quer zum Korridor verlaufenden Stufen für die Kopffreiheit benötigte Höhe durch eine Einschränkung des Raums des entsprechenden oberen Abteils (58) von unten her erreicht wird und der für die oberen, quer zum Korridor verlaufenden Stufen benötigte Platz durch eine Einschränkung des Raums der entsprechenden unteren Abteile (59) von oben her zustande kommt, wobei vorzugsweise die Betten entlang der Außenwände liegen und die Einschränkung des Raums bzw. Luftraum vorzugsweise den Abteilflur betrifft.

6. Anordnung von Abteilen und Bauweise des Korridors in einem Eisenbahnwaggon, bei der in wenigstens einem Abschnitt des Waggons Abteile in zwei Etagen mit Stehhöhe übereinander angeordnet sind, **dadurch gekennzeichnet, dass** durch den Waggon durchlaufende Korridor an wenigstens einer Stelle (91) auf eine Höhenlage zwischen der Höhe der beiden Etagen geführt wird und von dort wenigstens eine im wesentlichen in Längsrichtung des Waggons verlaufende Treppe (94) abgeht, die zu einem Raum bzw. Flur (95a) führt, von dem aus kein weiter durchlaufender Korridor in eine der Fahrtrichtungen weiterführt, und von dem aus Abteile bzw. Bettplätze (96, 96a, 97a, 98a) erreichbar sind, die vorzugsweise in beiden Fahrtrichtungen des Raumes bzw. Flures und an beiden Außenseiten gelegen sind.

7. Anordnung von Abteilen und Bauweise des Korridors in wenigstens einem Abschnitt eines Eisenbahnwaggons nach einem der der vorherigen Ansprüche 4 bis 6, **dadurch gekennzeichnet, dass** der Korridorverlauf bei einem Tiefpunkt bzw. einem Hochpunkt von einer außermittigen Lage auf einer Seite (77, 121, 126) zu einer außermittigen Lage auf der anderen Seite (85, 123) wechselt.

8. Anordnung von Bettpositionen in einem Eisenbahnwaggon nach einem der vorherigen Ansprüche im Bereich eines Eisenbahnwagons ohne dort durchlaufenden Korridor, vorzugsweise bei zweistöckiger Bauweise mit durchlaufenden Korridor in der anderen Etage, **dadurch gekennzeichnet, dass** in wenigstens einem Abschnitt des Waggons nebeneinender drei in Zuglängsrichtung ausgerichtete, getrennte Bettpositionen angeordnet werden, vorzugsweise in Form eines Abteils (160) mit in Fahrtrichtung orientierten Bettpositionen beidseitig eines Abteilflurs und daneben einer weiteren Bettposition (161).

9. Bettplatzanordnung in einem Abteil eines Eisenbahnwaggons mit Bauweise nach einem der vorstehenden Ansprüche, **dadurch gekennzeichnet, dass** ein Bett (180, 183) in Schlafposition vor der Zugangstür des Abteils angeordnet wird.

10. Anordnung von Abteilen in einem Eisenbahnwaggon nach einem der vorherigen Merkmale, **dadurch gekennzeichnet, dass** wenigstens ein breiterer und ein schmalerer Typ von Abteilen vorkommt, die durch Trapezform oder auf ähnliche Weiseeine unterschiedliche Breite an den beiden Schmalseiten eines Typs aufweisen, und bei denen zwei Abteile unterschiedlichen Typs so aneinander angrenzend angeordnet werden, dass die breitere Schmalseite eines schmaleren Abteils (237) an die schmalere Schmalseite eines breiteren Abteils (235) angrenzt,was es vorzugsweise ermöglicht, dass Kabinen mit entsprechenden Merkmalen mit umgekehrter Orientierung auf der anderen Seite des Korridors angeordnet werden.

11. Zusammenstellung von zweistöckigen Eisenbahnwaggons nach einem der vorherigen Ansprüche, **dadurch gekennzeichnet, dass** ein Teil der Plätze (401) in einem Waggon auf kürzestem Wege und/oder über die geringste zurückzulegende Höhendifferenz über eine Eingangstür (400) im benachbarten Waggon erreicht wird.

12. Sitzpaar in einem Eisenbahnwaggon nach einem der vorstehenden Ansprüche, bei dem die Sitze in Sitzposition gegenüberstehend montiert sind und jeweils wenigstens eine Rückenlehne und eine Sitzfläche aufweisen, **dadurch gekennzeichnet, dass** aus drei Teilen der beiden Sitze eine Liegefläche gebildet werden kann, indem die Rückenlehne (27) des einen Sitzes mit mindestens 60 cm Länge in eine liegende Position gebracht wird, die zugehörige Sitzfläche (25) entsprechend weit nach vorne verschoben wird und zusammen mit der Sitzfläche (26) des gegenüberstehenden Sitzes eine Liegefläche gebildet wird, wobei vorzugsweise die nach vorn verschobene Sitzfläche an einer seitlichen Wand abgestützt wird (30, 31) und die Rückenlehne (28) des anderen Sitzes nach oben weggeschoben oder weggeklappt werden kann.

13. Bauweise von Abteilen in einem Eisenbahnwaggon nach einem der vorstehenden Ansprüche, vorzugsweise mit einem Sitzpaar nach dem vorstehenden Anspruch, bei der sich in Liegeposition zwei Liegeflächen übereinander befinden, **dadurch gekennzeichnet, dass** die obere Liegefläche nebst Unterlage (22) schwenkbar bzw. absenkbar ist und mit der Schwenkung bzw. Absenkung in Liegeposition zusammen mit den seitlichen Abgrenzungen des Abteils sowie einer evtl. Konsole oder Abdichtung (23) ein räumlicher Abschluss zum unteren Abteils bzw. Teil des Abteils erreicht wird.

14. Bauweise eines Abteils (218) in einem Eisenbahnwaggon nach einem der vorstehenden Ansprüche, **dadurch gekennzeichnet, dass** die Liegefläche entlang der Außenwand liegt, und die Länge des Raums zwischen dieser und dem durch den Waggon verlaufenden Korridor teilweise von einem Abteilflur entlang eines Teils der Bettlänge, teilweise von einer Duschzelle eingenommen wird, wobei die Duschzelle von dem Abteilflur zugänglich ist.

15. Anordnung von Abteilen in einem zweistöckigen Eisenbahnwaggon, **dadurch gekennzeichnet, dass** ein Teil der Abteile (252 bis 255, 407) in der unteren Etage von einem getrennten Flur (256) aus erreichbar ist, der vom Bahnsteigniveau aus zugänglich ist, aber im Normalbetrieb keine für die Fahrgäste durchgängige Verbindung zu einem in der oberen Etage durchlaufenden Korridor besitzt.
